# EUROPEAN PATENT APPLICATION

(11) **EP 4 742 813 A1**
(43) Date of publication of application: **13.05.2026**
(21) Application number: 24850645.3
(22) Date of filing: 28.05.2024
(51) Int. Cl.: H04W 74/08

(54) **THRESHOLD CONFIGURATION METHOD, CHARACTERISTIC SELECTION METHOD, AND COMMUNICATION DEVICE**

(30) Priority: 10.08.2023 CN 202311007079
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Goddar, Heinz J.
(86) International application number: PCT/CN2024/095811
(87) International publication number: WO 2025/030993

(57) **Abstract**

Embodiments of this application relate to the field of communication, and provide a threshold configuration method, a feature selection method, and a communication device. Through the threshold configuration method, a network side device can reasonably set a threshold for each MSG1 repetition number according to resource configuration cases on a BWP. Through the feature selection method, a user terminal can reasonably select random access features according to a measured link quality parameter and a threshold. The threshold configuration method is applied to a network device. The method includes: sending a first threshold and second thresholds, where the first threshold is used for distinguishing whether to perform MSG1 repetition, and the second thresholds are used for distinguishing MSG1 repetition numbers.

## Description

This application claims priority to Chinese Patent Application No. 202311007079.6, filed with the China National Intellectual Property Administration on August 10, 2023 and entitled "THRESHOLD CONFIGURATION METHOD, FEATURE SELECTION METHOD, AND COMMUNICATION DEVICE", which is incorporated herein by reference in its entirety.

### TECHNICAL FIELD

Embodiments of this application relate to the communication field, and in particular, to a threshold configuration method, a feature selection method, and a communication device.

### BACKGROUND

Random access is a necessary process of establishing a radio link between a user terminal (User Equipment, UE) and a network side device in a communication system. The network side device is an access network device, such as a base station. Through the random access, the user terminal may establish the radio link with the network side device. Before the user terminal initiates random access to the network side device, the user terminal first receives configuration information broadcast by the network side device, and completes initialization based on the configuration information. The configuration information may include a threshold corresponding to a parameter representing link quality. The user terminal may determine an MSG1 (Message1) repetition number in the random access procedure by using the threshold.

The MSG1 repetition number is one of important features in the random access procedure. The user terminal may determine the MSG1 repetition number according to the measured link quality parameter and the threshold; and then, select a resource according to the determined MSG1 repetition number and other random access features that may exist.

A resource needed in the random access procedure is usually configured in a BWP (Bandwidth Part, bandwidth part), and there may be a plurality of resource configuration cases on the BWP. Therefore, the network side device needs to properly set a threshold for each MSG1 repetition number according to the resource configuration cases on the BWP, and the user terminal needs to properly select a random access feature according to the measured link quality parameter and the threshold.

### SUMMARY

Embodiments of this application provide a threshold configuration method, a feature selection method, and a communication device. Through the threshold configuration method, a network side device can reasonably set a threshold for each MSG1 repetition number according to resource configuration cases on a BWP. Through the feature selection method, a user terminal can reasonably select random access features according to a measured link quality parameter and a threshold.

According to a first aspect, provided is a threshold configuration method, applied to a network device. The method includes: sending a first threshold and second thresholds, where the first threshold is used for distinguishing whether to perform MSG1 repetition, and the second thresholds are used for distinguishing MSG1 repetition numbers.

In a possible implementation, the first threshold and the second threshold are configured by using a first configuration parameter, the first configuration parameter includes the corresponding threshold configured for each of the different MSG1 repetition numbers, and the first threshold is a threshold corresponding to a lowest repetition number or a lowest coverage level repetition number of the different MSG1 repetition numbers; and the second thresholds are thresholds of repetition numbers other than the lowest MSG1 repetition number of the different MSG1 repetition numbers.

In a possible implementation, the first threshold is configured by using a second configuration parameter, and the second thresholds are configured by using a third configuration parameter.

In a possible implementation, the first threshold is configured only when an RA resource set of non-MSG1 repetition is available.

In a possible implementation, when n MSG1 repetition numbers are configured, a quantity of the second thresholds is n-1.

According to a second aspect, provided is a threshold configuration method, applied to a network device. The method further includes: sending third thresholds, where the third thresholds are corresponding thresholds respectively configured for different MSG1 repetition numbers.

In a possible implementation, when n MSG1 repetition numbers are configured, a quantity of the third thresholds is n.

According to a third aspect, provided is a feature selection method, applied to a terminal device. The method includes: receiving a first threshold and a second threshold; determining, based on the first threshold, whether to perform MSG1 repetition; and determining an MSG1 repetition number based on the second threshold.

According to a fourth aspect, an electronic device is provided. The electronic device includes one or more processors and one or more memories. The one or more memories are coupled to the one or more processors, and the one or more memories store computer programs. When the one or more processors execute the computer programs, the electronic device is enabled to perform the threshold configuration method according to the embodiments of this application.

According to a fifth aspect, a computer-readable storage medium is provided. The computer-readable storage medium includes a computer program, and when a computer executes the program, the threshold configuration method provided in the embodiments of this application is performed.

According to a sixth aspect, a computer program product is provided. The computer program product includes instructions, and when the computer program product is run on a computer, the computer is enabled to perform the threshold configuration method provided in the embodiments of this application is performed.

### BRIEF DESCRIPTION OF DRAWINGS

FIG. 1 is a schematic flowchart of 4-step random access;
FIG. 2 is a schematic diagram of a resource configuration case according to an embodiment of this application;
FIG. 3 is a schematic diagram of a communication system according to an embodiment of this application;
FIG. 4 is a flowchart of a first threshold configuration method according to an embodiment of this application;
FIG. 5 is a flowchart of a first feature selection method according to an embodiment of this application;
FIG. 6 is a flowchart of a resource set selection method according to an embodiment of this application;
FIG. 7 is a schematic diagram of a resource set selection scenario according to an embodiment of this application;
FIG. 8 is a schematic diagram of a selection result of a resource set selection method according to an embodiment of this application; and
FIG. 9 is a structural diagram of a communication apparatus according to an embodiment of this application.

### DESCRIPTION OF EMBODIMENTS

In embodiments of this application, the terms "first", "second", "third", and the like are intended to distinguish between different objects but do not indicate a particular order. In addition, the word "in an example" or "for example" indicates giving an example, an illustration, or a description. Any embodiment or design solution described as "in an example" or "for example" in the embodiments of this application should not be explained as being more preferred or having more advantages than another embodiment or design solution. Exactly, use of the terms such as "in an example" or "for example" is intended to present a related concept in a specific manner.

The following first describes an application scenario of a threshold configuration method and a feature selection method provided in the embodiments of this application.

In a communication system, a user terminal (User Equipment, UE) initiates random access (Random Access, RA) to a network side device (for example, a base station), to obtain uplink synchronization or to obtain UL grant (uplink grant, uplink grant). The uplink synchronization means that in a same cell, uplink signals sent by user terminals at different locations that use a same timeslot are kept synchronized when arriving at the network side device. The UL grant is used to determine a format of an uplink signal sent by the user terminal, and the signal format may include resource allocation information, a transmission format, and the like.

After the random access is completed, the user terminal obtains the uplink synchronization or the UL grant.

According to different service triggering modes, the random access may be divided into contention based random access (Contention Based Random Access, CBRA) and contention free random access (Contention Free Random Access, CFRA). In the contention based random access, a preamble (Preamble) pool is shared between different user terminals. Therefore, different user terminals may select a same preamble, resulting in a contention relationship between different user terminals. However, in the contention free random access, a preamble is allocated by the network side device to each user terminal. Therefore, there is no contention relationship between different user terminals. Generally, the contention free random access is applicable to scenarios such as a switching process, a process of receiving downlink data in an RRC (Radio Resource Control, radio resource control) connected state, and a positioning process in the RRC connected state. The contention based random access is applicable to scenarios such as an initial RRC connection process and an RRC connection re-establishment process. Because the contention based random access requires time to resolve a contention problem, an access delay is higher than that of the contention free random access, and an access success rate is lower than that of the contention free random access.

It should be noted that, the random access in this embodiment of this application may be the foregoing contention based random access, or may be the contention free random access. This is not specifically limited herein.

According to different execution processes, the random access may be divided into 4-step random access (4-step RA) and 2-step random access (2-step RA). It should be understood that the 4-step random access means that a random access procedure is completed through 4 steps, and the 2-step random access means that a random access procedure is completed through two steps.

It needs to be noted that, the random access provided in the embodiments of this application may be the 4-step random access, or may be the 2-step random access. This is not specifically limited herein.

The following uses the 4-step random access as an example to describe the random access procedure.

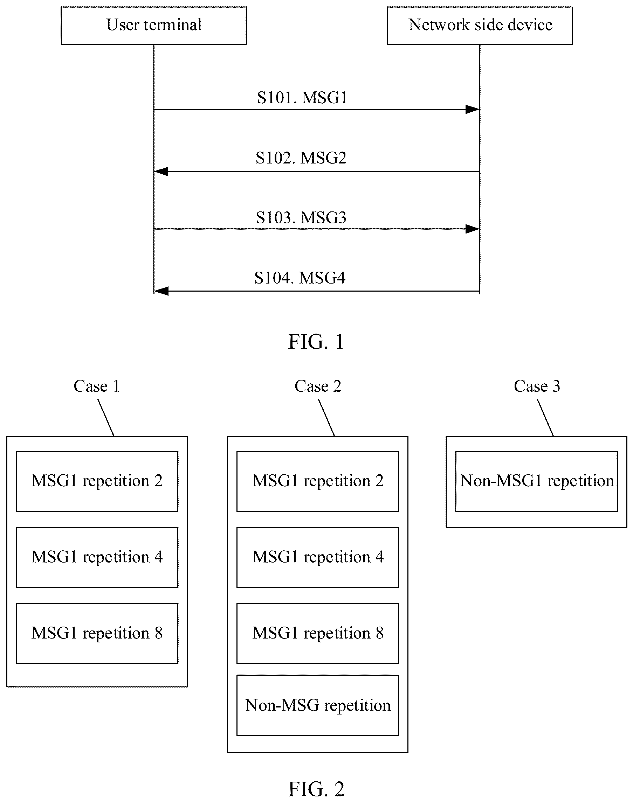

FIG. 1 is a schematic flowchart of 4-step random access. As shown in FIG. 1, the process may include the following steps.

S101. A user terminal sends an MSG1 (message1, message1) to a network side device.

The MSG1 may include a preamble (preamble), and is used to initiate a random access request to the network side device.

S102. The network side device sends an MSG2 (message2, message2) to the user terminal in response to receiving the MSG1.

The MSG2 may also be referred to as a random access response (random access response), and may include scheduling information of an MSG3 (message3, message3). Specifically, the MSG2 may be used to indicate how the UE sends the MSG3.

S103. The user terminal sends the MSG3 to the network side device in response to receiving the MSG2.

The MSG3 may carry an RRC connection request (RRC Connection Request), an RRC connection re-establishment request (RRC Connection Re-establishment Request), and the like.

S104. The network side device sends an MSG4 (message4, message4) to the user terminal in response to receiving the MSG3.

The MSG4 may include a response message determined by the network side device for the MSG3, and the response message may include related information used for contention resolution between the user terminals.

Through S101 to S104, the user terminal can complete the 4-step random access.

It needs to be noted that, before the user terminal initiates random access to the network side device, the user terminal first receives configuration information broadcast by the network side device, and completes initialization based on the configuration information. The configuration information may include information such as SSB ((PSS (Primary Synchronization Signal, primary synchronization signal), an SSS (Secondary Synchronization Signal, secondary synchronization signal), and a PBCH (physical broadcast channel)) information, and the like. The configuration information may be used by the user terminal to align with the network side device in terms of a frequency, a time, and the like, and may be further used by the user terminal to obtain a parameter and the like required for the random access.

In this embodiment of this application, the parameter required for the random access may also be referred to as a random access parameter. The random access parameter may include a threshold. The threshold may be used by the user terminal to determine an MSG1 repetition (MSG1 repetition) number in the random access procedure. For example, the threshold may be a link quality threshold, such as an RSRP (Reference Signal Received Power, reference signal received power) threshold, an RSSI (Received Singnal Strengthen Indicator, received signal strengthen indicator) threshold, and an SINR (Signal to Interference&Noise Ratio, signal to interference&noise ratio) threshold. For ease of description, in the following embodiments, a threshold in the configuration information broadcast by the network side device is referred to as a threshold configured by the network side device, and description is made using an example in which the threshold is an RSRP threshold. Details are not described again below.

The MSG1 repetition number is a random access feature. A process in which the user terminal transmits the MSG1 to the network side device includes a plurality of attempts. The MSG1 repetition number is a number of times of repeated transmission of the MSG1 in each of the attempts. In NR (New Radio, New Radio), the MSG1 repetition number may be 2, 4, 8, or the like. The MSG1 repetition number when being 2 may be written as MSG1 repetition 2. The MSG1 repetition number when being 4 may be written as MSG1 repetition 4. The MSG1 repetition number when being 8 may be written as MSG1 repetition 8.

When the user terminal performs initialization, the user terminal determines an MSG1 repetition number based on a relationship between currently measured RSRP and the foregoing threshold. For example, the MSG1 repetition numbers include the MSG1 repetition 2 and the MSG1 repetition 4. The threshold corresponding to the MSG1 repetition 2 is A, and the threshold corresponding to the MSG1 repetition 4 is B. The RSRP currently measured by the user terminal is C, where A is greater than B. In this scenario, when C is less than A and is greater than B, the user terminal may determine that an MSG1 repetition number is the MSG1 repetition 2. When C is less than B, the user terminal may determine that an MSG1 repetition number is the MSG1 repetition 4.

When the user terminal performs initialization, the user terminal selects, according to the determined MSG1 repetition number, a resource associated with a feature of the MSG1 repetition number, and performs a subsequent random access procedure by using the determined resource.

It needs to be noted that, a resource needed in a random access procedure is usually configured on a BWP (Bandwidth Part, bandwidth part). The user terminal needs to first determine a BWP before performing resource selection, and then selects, according to an MSG1 repetition number determined according to a threshold and currently measured RSRP and other random access features that may exist, a resource configured on the BWP. The other random access features that may exist may include an MSG3 repetition number, an SDT (Small Data Transmission, small data transmission), a RedCap (Reduced Capability, reduced capability), a Slice (slice), and the like. The BWP is a segment of consecutive RB (Resource Block, resource block) on a given carrier. Because NR (New Radio, New Radio) covers a relatively large bandwidth, the network side device may configure different BWPs for different user terminals as operating bandwidths of the corresponding user terminals, to reduce power consumption of the user terminals.

Referring to FIG. 2, there may be the following three resource configuration cases on a BWP.

Case 1: Only resources for MSG1 repetition are configured on the BWP.

It should be understood that, the resources for MSG1 repetition may include different repetition resources for MSG1 repetition. For example, a resource set configured for a random access procedure from a network device to a terminal includes at least a resource set for n MSG1 repetition numbers, where n is an integer greater than or equal to 1. That is, not only a resource for one MSG1 repetition number, but also resources for two or more MSG1 repetition numbers may be configured, so that the terminal selects, based on the configured resource set and thresholds corresponding to the n MSG1 repetition numbers, an MSG1 repetition number to initiate random access.

For example, an example in which the MSG1 repetition numbers include 2, 4, and 8 is used. As shown in FIG. 2, in Case 1, a resource for MSG1 repetition 2, a resource for MSG1 repetition 4, and a resource for MSG1 repetition 8 may be configured on the BWP. Case 2: Both resources for MSG1 repetition and resources for non-MSG1 repetition are configured on the BWP.

The resources for non-MSG1 repetition are resources for the other random access features that may exist in the foregoing embodiment. The resources for non-MSG1 repetition may include a resource for MSG3 repetition, a resource for SDT, a resource for RedCap, a resource for Slice, and the like.

As shown in FIG. 2, in Case 2, a resource for MSG1 repetition 2, a resource for MSG1 repetition 4, a resource for MSG1 repetition 8, and a resource for non-MSG1 repetition may be configured on the BWP.

In this application, the resources for MSG1 repetition may be alternatively described as resources used for MSG1 repetition or MSG1 repetition resources. The resources for non-MSG1 repetition may be alternatively described as resources used for non-MSG1 repetition or non-MSG1 repetition resources. The resources for MSG3 repetition may be alternatively described as resources used for MSG3 repetition or MSG3 repetition resources, which is not limited.

Case 3: Only resources for non-MSG1 repetition are configured on the BWP.

As shown in FIG. 2, in Case 3, only resources for non-MSG1 repetition may be configured on the BWP.

Based on this, an embodiment of this application provides a threshold configuration method: In Case 1, the threshold configured by the network side device should be capable of distinguishing different MSG1 repetition numbers. In Case 2, the threshold in the configuration information broadcast by the network side device should be capable of distinguishing an MSG1 repetition number from a non-MSG1 repetition number. The network side can configure a threshold for the user terminal according to the resource configuration case on the BWP, so that the user terminal can better select, according to a random access feature determined according to the threshold, a resource configured on the BWP, thereby improving a success rate of random access. Correspondingly, an embodiment of this application further provides a feature selection method. The feature selection method is applied to a user terminal, and can determine a random access feature according to a threshold configured by a network side device, so that the user terminal can better select, according to the determined random access feature, a resource configured on a BWP, thereby improving a success rate of random access.

The threshold configuration method and the feature selection method provided in the embodiments of this application may be applied to various communication systems. For example, the communication system may be a 3rd generation partnership project (3rd generation partnership project, 3GPP) communication system, a 4th generation (4th generation, 4G) long term evolution (long term evolution, LTE) system, a 5th generation (5th generation, 5G) New Radio (new radio, NR) system, a vehicle to everything (vehicle to everything, V2X) system, a system of hybrid networking of LTE and NR, or a device-to-device (device-to-device, D2D) system, a machine to machine (machine to machine, M2M) communication system, an Internet of Things (Internet of Things, IoT), another next generation communication system, or the like.

The foregoing communication systems to which this application is applicable are only examples for description, and the communication systems to which this application is applicable are not limited thereto. Unified descriptions are provided herein, and details are not described below again.

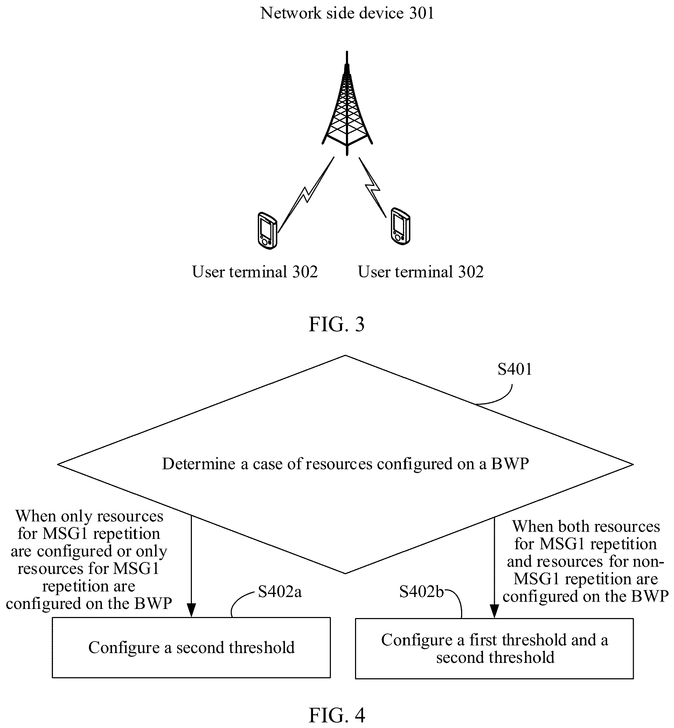

FIG. 3 is a schematic diagram of a communication system according to an embodiment of this application. The communication system includes at least one network side device 301 and at least one user terminal 302.

Optionally, the user terminal 302 and the user terminal 302, and the network side device 301 and the network side device 301 may communicate with each other in a wired or wireless manner. FIG. 3 is merely a schematic diagram. The communication system may further include other network side devices 301, for example, may further include a wireless relay device, a wireless backhaul device, and a core network device, which are not shown in FIG. 3. A quantity of the network side devices 301 and a quantity of the user terminal 302 in FIG. 3 are merely examples. The communication system may include more or fewer network side devices 301 or user terminal 302 than those shown in FIG. 3.

Optionally, the user terminal 302 may be a user side device with a wireless transceiver function. The user terminal 302 may also be referred to as user equipment (user equipment, UE), a user terminal device, an access user terminal, a subscriber unit, a subscriber station, a mobile station (mobile station, MS), a remote station, a remote user terminal, a mobile user terminal (mobile terminal, MT), a user terminal, a wireless communication device, a user agent, or a user apparatus. The user terminal may be, for example, the user terminal in an IoT, a V2X, a D2D, an M2M, a 5G network, or a public land mobile network (public land mobile network, PLMN) in future evolution. The user terminal 302 may be deployed on land, including indoors or outdoors, handheld or vehicle-mounted; or may be deployed on the water (for example, a ship); or may be deployed in the air (for example, an airplane, a balloon, or a satellite).

For example, the user terminal 302 may be an unmanned aerial vehicle, an IoT device (for example, a sensor, an electricity meter, or a water meter), a V2X device, a station (station, ST) in a wireless local area network (wireless local area networks, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device (which may also be referred to as a wearable intelligent device), a tablet computer or a computer with a wireless transceiver function, a virtual reality (virtual reality, VR) user terminal 302, a wireless user terminal in industrial control (industrial control), a wireless user terminal in self driving (self driving), a wireless user terminal in remote medical (remote medical), a wireless user terminal in a smart grid (smart grid), a wireless user terminal in transportation safety (transportation safety), a wireless user terminal in a smart city (smart city), a wireless user terminal in a smart home (smart home), a vehicle-mounted user terminal, a vehicle with a vehicle-to-vehicle (vehicle-to-vehicle, V2V) communication capability, an intelligent connected vehicle, an unmanned aerial vehicle with an unmanned aerial vehicle (unmanned aerial vehicle, UAV) to an unmanned aerial vehicle (UAV to UAV, U2U) communication capability, and the like. The user terminal 302 may be movable or stationary. This is not specifically limited in this application.

Optionally, the network side device 301 is a device that connects the user terminal 302 to a wireless network, and may be a next-generation node B (next generation node B, gNodeB or gNB) in a 5G system, or may be a transmission reception point (transmission reception point, TRP), or may be a base station in a future evolved PLMN, or may be a broadband network gateway (broadband network gateway, BNG), an aggregation switch, or a non-3GPP access device, or may be a wireless controller in a cloud radio access network (cloud radio access network, CRAN); or may be an access point (access point, AP) in a WiFi system, or may be a wireless relay node or a wireless backhaul node; or may be a device that implements a base station function in IoT, V2X, D2D, or M2M. This is not specifically limited in this embodiment of this application. For example, the base station in this embodiment of this application may include various forms of base stations, such as a macro base station, a micro base station (also referred to as a small cell), a relay station, and an access point. This is not specifically limited in this embodiment of this application.

In some possible scenarios, the network side device 301 may alternatively be a module or unit that can implement some or all functions of the base station. For example, the network side device 301 may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or CU-CP and CU-UP), the DU, or the RU may alternatively have different names, but a person skilled in the art may understand meanings of these names. For example, the network side device 301 may be a network side device in an open RAN (open RAN, ORAN) system, or a module in the network side device. In the ORAN system, the CU may also be referred to as open (open, O)-CU, the DU may also be referred to as O-DU, the CU-CP may also be referred to as O-CU-CP, the CU-UP may also be referred to as O-CU-UP, and the RU may also be referred to as O-RU. Any unit of the CU (or the CU-CP or the CU-UP), the DU, and the RU in this application may be implemented by using a software module, a hardware module, or a combination of the software module and the hardware module.

It needs to be noted that, a communication system described in the embodiments of this application is intended to describe the technical solutions in the embodiments of this application more clearly, and does not constitute a limitation on the technical solutions provided in the embodiments of this application. A person of ordinary skill in the art can learn that with evolution of network architectures and emergence of new service scenarios, the technical solutions provided in the embodiments of this application are also applicable to a similar technical problem.

Based on the foregoing descriptions of the application scenario and the applicable communication system of this application, the following describes the threshold configuration method and the feature selection method provided in the embodiments of this application. The embodiments of this application provide two threshold configuration methods, both of which are applied to a network side device. For ease of description, the two threshold configuration methods may be respectively referred to as a first threshold configuration method and a second threshold configuration method. The following first describes the first threshold configuration method.

The first threshold configuration method may be stated as follows: A first threshold and a second threshold are configured. The first threshold is used for distinguishing MSG1 repetition, or an alternative description is that the first threshold is used for distinguishing whether to perform MSG1 repetition, or an alternative description is that the first threshold is used for determining whether to select MSG1 repetition. The second threshold is used for distinguishing MSG1 repetition numbers.

Optionally, the second threshold may be referred to as rsrp-ThresholdMsg1-RepetitionNumX.

In an implementation, the first threshold and the second threshold may be configured by using one configuration parameter. The configuration parameter configures a threshold corresponding to an MSG1 repetition number. A threshold corresponding to a lowest repetition number or a lowest coverage level repetition number configured by the configuration parameter may be the first threshold. A threshold corresponding to an MSG1 repetition number other than the MSG1 repetition number that is the lowest repetition number may be the second threshold. In this application, there may be a plurality of different MSG1 repetition numbers. For example, there are n MSG1 repetition numbers, n being an integer greater than 1. In the plurality of different MSG1 repetition numbers, a repetition number for the smallest MSG1 repetition number may be referred to as a lowest repetition number or a lowest coverage level repetition number. For example, the MSG1 repetition numbers include 2, 4, and 8, where the repetition number 2 may be referred to as a lowest repetition number, and 4 and 8 may be referred to as repetition numbers other than the lowest repetition number. Specifically, in this implementation, that the configuration parameter configures a threshold corresponding to an MSG1 repetition number may include: If only resources for MSG1 repetition are configured or only resources for MSG1 repetition are configured on the BWP, a corresponding second threshold is configured for each of MSG1 repetition numbers other than the lowest repetition number or the lowest coverage level repetition number. If both resources for MSG1 repetition and resources for non-MSG1 repetition are configured, or when both resources for MSG1 repetition and resources for non-MSG1 repetition are configured on the BWP, a corresponding second threshold is configured for each of different MSG1 repetition numbers. A second threshold configured for a lowest repetition number or a lowest coverage level repetition number is the first threshold.

In this application, the configuration parameter may also be referred to as configuration information, and the configuration information may be rach-ConfigDedicated.

In addition to configuring the threshold, the configuration information may be used for configuring a random access resource set (Random Access resource set) (or referred to as a resource set/random access resource) for the terminal. The random access resource set may be used for a random access procedure. The terminal may select an available resource set from resource sets configured by the network device for the random access procedure to initiate random access.

For example, n MSG1 repetition numbers are configured, and different MSG1 repetition numbers are sequentially A1, A2, ..., and An in ascending order of repetition numbers. If only resources for MSG1 repetition are configured or only resources for MSG1 repetition are configured on the BWP, the network side device may configure a corresponding threshold for each of A2 to An by using one configuration parameter. The threshold is the foregoing second threshold. If both resources for MSG1 repetition and resources for non-MSG1 repetition are configured, the network side device may configure a corresponding second threshold for each of A1 to An. The second threshold configured for A1 is the first threshold.

That is, when only resources for MSG1 repetition are configured on the BWP, the network side device may configure only n-1 second thresholds. The n-1 second thresholds are respectively thresholds corresponding to A2 to An other than the lowest repetition number A1. When both resources for MSG1 repetition and resources for non-MSG1 repetition are configured on the BWP, the network side device may configure one first threshold and n-1 second thresholds. The n-1 second thresholds are respectively thresholds corresponding to A2 to An, and the one first threshold is a threshold corresponding to A1 or a corresponding threshold for distinguishing whether to perform MSG1 repetition.

It should be understood that, in this implementation, only when resources for MSG1 repetition and resources for non-MSG1 repetition are configured on the BWP, the network side device configures the first threshold. In this case, the first threshold configuration method may be stated as follows: When both resources for MSG1 repetition and resources for non-MSG1 repetition are configured on the BWP, the first threshold and the second threshold are configured. When only resources for MSG1 repetition are configured on the BWP, the first threshold configuration method may be stated as follows: The first threshold is not configured, and only the second threshold is configured.

For a specific implementation process of this implementation, refer to description in the following embodiment corresponding to FIG. 4.

In another implementation, the first threshold and the second threshold are respectively configured by using two different configuration parameters. The first threshold is configured by using the first configuration parameter, and is used to distinguish whether to perform MSG1 repetition, and is further used to distinguish whether to perform MSG1 repetition when resources for MSG1 repetition and resources for non-MSG1 repetition are configured. The second threshold is configured by using the second configuration parameter, and is used to distinguish MSG1 repetition numbers, and when n MSG1 repetition numbers are configured, a quantity of the second thresholds is n-1.

Specifically, in another implementation, that the first threshold and the second threshold are respectively configured by using two different configuration parameters may include: If only resources for MSG1 repetition are configured or only resources for MSG1 repetition are configured on the BWP, a corresponding second threshold is configured for each of MSG1 repetition numbers other than the lowest repetition number or the lowest coverage level repetition number. If both resources for MSG1 repetition and resources for non-MSG1 repetition are configured, or when both resources for MSG1 repetition and resources for non-MSG1 repetition are configured on the BWP, a corresponding second threshold is configured for each of different MSG1 repetition numbers, and a corresponding first threshold is configured for selecting whether to perform MSG1 repetition.

It may be understood that, when only resources for MSG1 repetition are configured on the BWP, the network side device may also configure n-1 second thresholds and one first threshold. The n-1 second thresholds are respectively thresholds corresponding to A2 to An. In this scenario, when performing feature selection according to the threshold and the measured RSRP, the user terminal uses only the n-1 second thresholds, and does not use the first threshold. Therefore, the first threshold may be any threshold, and is not specifically limited herein.

In still another implementation, the first threshold is configured only when an RA resource set of non-MSG1 repetition is available. That is, the first threshold is configured when resources for non-MSG1 repetition are configured or when resources for non-MSG1 repetition are configured on the BWP and the resources for non-MSG1 repetition are available. Specifically, the first threshold is used for determining whether to select MSG1 repetition.

Alternatively, when only resources for non-MSG1 repetition are configured on the BWP, the network side device may not configure a threshold, for example, does not configure the first threshold and/or the second threshold. Specifically, when only resources for non-MSG1 repetition are configured on the BWP and an RA resource set in the resources for non-MSG1 repetition is available, the first threshold may be configured and the second threshold is not configured. When only resources for non-MSG1 repetition are configured on the BWP and an RA resource set in the resources for non-MSG1 repetition is unavailable, the first threshold and the second threshold are not configured.

It needs to be noted that, a corresponding second threshold configured for an MSG1 repetition number of a repetition number needs to satisfy that the second threshold can support the user terminal in distinguishing whether to select the MSG1 repetition number of the repetition number. For example, a corresponding threshold T1 configured for the MSG1 repetition 4 should satisfy that the user terminal can determine, according to the threshold and the measured RSRP, whether to select the MSG1 repetition 4. For example, when the measured RSRP is less than T1, MSG1 repetition 4 may be selected; when the measured RSRP is greater than T1, MSG1 repetition 4 is not selected.

Different MSG1 repetition numbers refer to MSG1 repetition numbers whose repetition numbers are different. For example, the repetition number of the MSG1 repetition 2 is 2, and the repetition number of the MSG1 repetition 4 is 4. Therefore, the MSG1 repetition 2 and the MSG1 repetition 4 are different MSG1 repetition numbers.

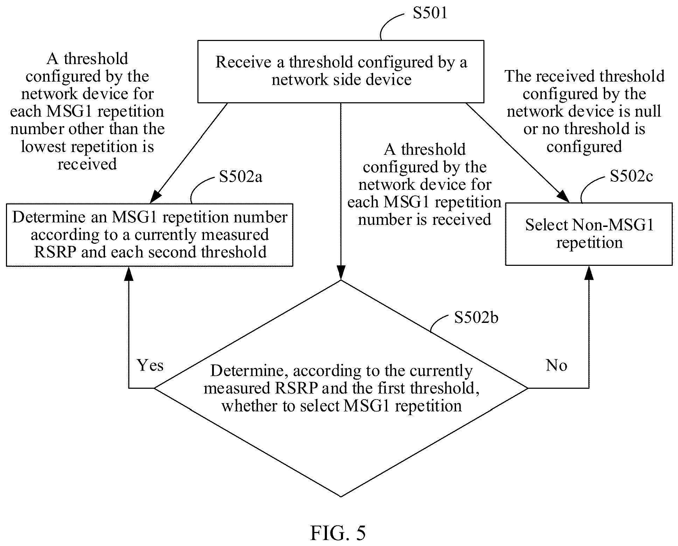

The following respectively describes, with reference to FIG. 4 and FIG. 5, a first threshold configuration method and a first feature selection method corresponding to the first threshold configuration method provided in the embodiments of this application. FIG. 4 provides a specific implementation process of a first threshold configuration method according to an embodiment of this application. It should be understood that, the specific implementation process is merely an example, and is used to provide a possible execution process of the first threshold configuration method. Therefore, the specific implementation process should not be understood as a limitation on the first threshold configuration method provided in this embodiment of this application.

FIG. 4 is a flowchart of a first threshold configuration method according to an embodiment of this application. As shown in FIG. 4, the process may include the following steps.

S401. Determine a case of resources configured on a BWP. When only resources for MSG1 repetition are configured or only resources for MSG1 repetition are configured on the BWP, S402a is performed. When both resources for MSG1 repetition and resources for non-MSG1 repetition are configured on the BWP, S402b is performed.

With reference to FIG. 2, there may be three cases of resources configured on the BWP: Only resources for MSG1 repetition are configured on the BWP, both resources for MSG1 repetition and resources for non-MSG1 repetition are configured on the BWP, and Only resources for non-MSG1 repetition are configured on the BWP.

S402a. Configure a second threshold. For example, a corresponding second threshold is configured for each of MSG1 repetition numbers other than the MSG1 repetition number being the lowest repetition number.

The second threshold is described above. The second threshold is used to distinguish MSG1 repetition numbers.

An example in which resources for n MSG1 repetition numbers are configured on the BWP is used:

In an example, the network device configures thresholds corresponding to the n MSG1 repetition numbers for the terminal. One MSG1 repetition number corresponds to one threshold. That is, n thresholds are configured. A threshold corresponding to an MSG1 repetition number is used by the terminal to determine, based on a magnitude relationship between signal quality and the threshold, whether to select the MSG1 repetition number to initiate random access. If the signal quality is less than a second threshold corresponding to an i^{th} MSG1 repetition number of the n MSG1 repetition numbers in ascending order of repetition numbers, an i^{th} MSG2 repetition number is selected, where a value range of i is [1, n]. If the signal quality is not less than a second threshold corresponding to any MSG1 repetition number, a lowest MSG1 repetition number is selected, that is, the 1st repetition number of the n MSG1 repetition numbers in ascending order of repetition numbers.

In another example, the network device configures thresholds corresponding to n-1 MSG1 repetition numbers other than the lowest MSG1 repetition number for the terminal. That is, n-1 thresholds are configured. The threshold may be used by the terminal to determine, based on a magnitude relationship between signal quality and the threshold, whether to select the MSG1 repetition number corresponding to the threshold to initiate random access. If the signal quality is less than a second threshold corresponding to an i^{th} MSG1 repetition number of the n MSG1 repetition numbers in ascending order of repetition numbers, an i^{th} MSG2 repetition number is selected, where a value range of i is [2, n]. If the signal quality is not less than a second threshold corresponding to any MSG1 repetition number or not less than a threshold corresponding to the 2nd MSG1 repetition number, a lowest MSG1 repetition number is selected, that is, the 1st repetition number of the n MSG1 repetition numbers in ascending order of repetition numbers.

It should be understood that, in the example, when resources for 1 MSG1 repetition number are configured on the BWP, that is, when n = 1, the network device may not configure a threshold corresponding to the MSG1 repetition number. Herein, the MSG1 repetition number related to the resources configured on the BWP is selected to initiate random access.

For example, as shown in Case 1 in FIG. 2, resources configured on the BWP include only resources for MSG1 repetition. The resources for MSG1 repetition may be used for MSG1 repetition 2, MSG1 repetition 4, and MSG1 repetition 8. Therefore, S402a means configuring a corresponding second threshold for the MSG1 repetition 4, and configuring a corresponding second threshold for the MSG1 repetition 8, but configuring no corresponding threshold for the MSG1 repetition 2. The thresholds configured for the MSG1 repetition 4 and the MSG1 repetition 8 are both the foregoing second thresholds. In this case, the network device configures three third thresholds for the terminal: rsrp-ThresholdMsg1-RepetitionNum2 corresponding to MSG1 repetition 2, rsrp-ThresholdMsg1-RepetitionNum4 corresponding to MSG1 repetition 4, and rsrp-ThresholdMsgl-RepetitionNum8 corresponding to MSG1 repetition 8. The threshold rsrp-ThresholdMsg1-RepetitionNum8 is used for selecting the MSG1 repetition 8. If the signal quality is less than the threshold rsrp-ThresholdMsg1-RepetitionNum8, the MSG1 repetition 8 is selected. The threshold rsrp-ThresholdMsg1-RepetitionNum4 is used for selecting the MSG1 repetition 4. If the signal quality is less than the threshold rsrp-ThresholdMsg1-RepetitionNum4, the MSG1 repetition 4 is selected. The threshold rsrp-ThresholdMsg1-RepetitionNum2 is used for selecting the MSG1 repetition 2. If the signal quality is less than the threshold rsrp-ThresholdMsg1-RepetitionNum2, the MSG1 repetition 2 is selected.

Alternatively, the network device configures two second thresholds for the terminal: rsrp-ThresholdMsg1-RepetitionNum4 corresponding to MSG1 repetition 4, and rsrp-ThresholdMsg1-RepetitionNum8 corresponding to MSG1 repetition 8. The threshold rsrp-ThresholdMsg1-RepetitionNum8 is used for selecting the MSG1 repetition 8. If the signal quality is less than the threshold rsrp-ThresholdMsg1-RepetitionNum8, the MSG1 repetition 8 is selected. The threshold rsrp-ThresholdMsg1-RepetitionNum4 is used for selecting the MSG1 repetition 4. If the signal quality is less than the threshold rsrp-ThresholdMsg1-RepetitionNum4, the MSG1 repetition 4 is selected. If the signal quality is greater than or equal to the threshold rsrp-ThresholdMsg1-RepetitionNum4, the MSG1 repetition 2 is selected.

If both resources for MSG1 repetition and resources for non-MSG1 repetition are configured on the BWP, the network side device may configure a corresponding threshold for each of different MSG1 repetition numbers, that is, the following S402b.

S402b. Configure a first threshold and a second threshold.

Specifically, S402b may include: configuring a first threshold for a lowest repetition number, and configuring a corresponding second threshold for each of repetition numbers other than the lowest repetition number.

In this case, because both resources for MSG1 repetition and resources for non-MSG1 repetition are configured on the BWP, random access may be initiated by selecting an MSG1 repetition feature, or random access may be initiated by selecting a non-MSG1 repetition feature. To distinguish whether an MSG1 repetition feature is selected or a non-MSG1 repetition feature is selected, and which MSG1 repetition number is specifically selected when the MSG1 repetition feature is selected, the network device may configure thresholds corresponding to the n MSG1 repetition numbers for the terminal. One MSG1 repetition number corresponds to one threshold. That is, n thresholds are configured. A threshold corresponding to an MSG1 repetition number is used by the terminal to determine, based on a magnitude relationship between signal quality and the threshold, whether to select the MSG1 repetition number to initiate random access.

In an example, the n thresholds configured by the network device for the terminal may include n second thresholds. The second thresholds have related description similar to that in the foregoing Case 1, and may be used for distinguishing MSG1 repetition numbers. If the signal quality is less than a second threshold corresponding to an i^{th} MSG1 repetition number of the n MSG1 repetition numbers in ascending order of repetition numbers, an i^{th} MSG2 repetition number is selected, where a value range of i is [1, n]. If the signal quality is not less than a second threshold corresponding to any MSG1 repetition number or not less than a second threshold corresponding to the lowest MSG1 repetition number, non-MSG1 repetition is selected.

In another example, the n thresholds configured by the network device for the terminal may include one first threshold and n-1 second thresholds. The first threshold may be used for distinguishing whether to select an MSG1 repetition feature. The second thresholds have related description similar to that in the foregoing Case 1, and may be used for distinguishing MSG1 repetition numbers. Non-MSG1 repetition is selected if the signal quality is not less than the first threshold. MSG1 repetition is selected if the signal quality is less than the first threshold. When MSG1 repetition is selected, if the signal quality is less than a second threshold corresponding to an i^{th} MSG1 repetition number of the n MSG1 repetition numbers in ascending order of repetition numbers, an i^{th} MSG2 repetition number is selected, where a value range of i is [2, n].

For example, as shown in Case 2 in FIG. 2, both resources for MSG1 repetition and resources for non-MSG1 repetition are configured on the BWP. The resources for MSG1 repetition may be used for MSG1 repetition 2, MSG1 repetition 4, and MSG1 repetition 8. Therefore, S402b means configuring a corresponding threshold for the MSG1 repetition 2, configuring a corresponding threshold for the MSG1 repetition 4, and configuring a corresponding threshold for the MSG1 repetition 8. The threshold configured for the MSG1 repetition 2 is the foregoing first threshold. The thresholds configured for the MSG1 repetition 4 and the MSG1 repetition 8 are both the foregoing second thresholds. In this case, the network device may configure, for the terminal, the threshold rsrp-ThresholdMsg1-RepetitionNum2 corresponding to the MSG1 repetition 2, the threshold rsrp-ThresholdMsg1-RepetitionNum4 corresponding to the MSG1 repetition 4, and the threshold rsrp-ThresholdMsg1-RepetitionNum8 corresponding to the MSG1 repetition 8, where rsrp-ThresholdMsg1-RepetitionNum8 and rsrp-ThresholdMsg1-RepetitionNum4 are the second thresholds, and rsrp-ThresholdMsg1-RepetitionNum2 may be referred to as the first threshold. The threshold rsrp-ThresholdMsg1-RepetitionNum8 is used for selecting the MSG1 repetition 8. If the signal quality is less than the threshold rsrp-ThresholdMsg1-RepetitionNum8, the MSG1 repetition 8 is selected. The threshold rsrp-ThresholdMsg1-RepetitionNum4 is used for selecting the MSG1 repetition 4. If the signal quality is less than the threshold rsrp-ThresholdMsg1-RepetitionNum4, the MSG1 repetition 4 is selected. The threshold rsrp-ThresholdMsg1-RepetitionNum2 is used for selecting the MSG1 repetition 2. If the signal quality is less than the threshold rsrp-ThresholdMsg1-RepetitionNum2, the MSG1 repetition 2 is selected. If the signal quality is greater than or equal to the threshold rsrp-ThresholdMsg1-RepetitionNum2, non-MSG1 repetition is selected.

It may be learned that the thresholds configured by using the first threshold configuration method provided in this embodiment of this application can help the user terminal to distinguish, based on a threshold (for example, the first threshold), between an MSG1 repetition and a non-MSG1 repetition, and help the terminal side to select an MSG1 repetition and a non-MSG1 repetition, and select an appropriate MSG1 repetition number based on a threshold (for example, the second threshold) in a case of MSG1 repetition.

Optionally, when only resources for non-MSG1 repetition are configured on the BWP, for example, when only features other than the MSG1 repetition including the RedCap are configured, and only resources for the RedCap are configured on the BWP, the random access procedure is not applicable to the MSG1 repetition, but to the non-MSG1 repetition, that is, the random access is initiated by using the non-MSG1 repetition. In this case, the network device does not configure, for the terminal, the first threshold used for distinguishing whether to be applicable to MSG1 repetition and/or the second threshold used for distinguishing MSG1 repetition numbers, and the feature is a non-MSG1 repetition feature related to resources configured on the BWP.

The foregoing is the threshold configuration method provided in the embodiments of this application. After the network side device configures a threshold for the user terminal according to the foregoing threshold configuration method, the user terminal may select a feature according to the threshold and the currently measured RSRP.

The following describes a first feature selection method according to an embodiment of this application. It should be understood that, corresponding to the two threshold configuration methods provided in the embodiments of this application, the embodiments of this application provide two feature selection methods, both of which are applied to the user terminal. The two feature selection methods may be respectively referred to as a first feature selection method and a second feature selection method. The first feature selection method corresponds to the first threshold configuration method, and the second feature selection method corresponds to the second threshold configuration method. That is, when the network side device performs the first threshold configuration method, the user terminal may perform the first feature selection method. When the network side device performs the second threshold configuration method, the user terminal may perform the second feature selection method.

The following first describes the first feature selection method. The first feature selection method may be stated as follows: Based on the currently measured RSRP, MSG1 repetition or non-MSG1 repetition is selected according to a first threshold, and an MSG1 repetition number is selected according to a second threshold.

Specifically, when only resources for MSG1 repetition are configured on the BWP, an MSG1 repetition number is selected according to the currently measured RSRP and each second threshold. When both resources for MSG1 repetition and resources for non-MSG1 repetition are configured on the BWP, based on the currently measured RSRP, MSG1 repetition or non-MSG1 repetition is selected according to a first threshold, and an MSG1 repetition number is selected according to a second threshold. When only resources for non-MSG1 repetition are configured on the BWP, non-MSG1 repetition is selected.

Specifically, when only resources for MSG1 repetition are configured on the BWP, or when both resources for MSG1 repetition and resources for non-MSG1 repetition are configured on the BWP, and the currently measured RSRP is less than or equal to the first threshold, the user terminal may select a repetition number of an MSG1 according to the currently measured RSRP and each second threshold.

When only resources for non-MSG1 repetition are configured on the BWP, or when both resources for MSG1 repetition and resources for non-MSG1 repetition are configured on the BWP, and the currently measured RSRP is greater than the first threshold, non-MSG1 repetition is selected.

For example, resources for MSG1 repetition are configured on the BWP, there are n MSG1 repetition numbers, and different MSG1 repetition numbers are sequentially referred to as A1, A2, ..., and An in ascending order of repetition numbers. the network side device configures a threshold B2 for A2, configures a threshold B3 for A3, ..., configures a threshold Bn for An. When resources for non-MSG1 repetition are further configured on the BWP, a configured threshold is B1. It should be understood that, B1 to Bn are in a sequentially decreasing relationship. In this way, a smaller currently measured RSRP indicates a larger probability of selecting MSG1 repetition, and a larger selected MSG1 repetition number when MSG1 repetition is selected.

Using an example in which there are n MSG1 repetition numbers: A1, A2, ..., An, and second thresholds corresponding to A2, ..., and An are respectively B2, ..., and Bn, the first feature selection method may be stated as follows:
1) When only resources for MSG1 repetition are configured or only a plurality of resources for MSG1 repetition are configured on the selected BWP; or when both resources for MSG1 repetition and resources for non-MSG1 repetition are configured, or when both resources for MSG1 repetition and resources for non-MSG1 repetition are configured on the selected BWP, and the currently measured RSRP is less than or equal to the first threshold, MSG1 repetition is selected. Further, an appropriate MSG1 repetition number is selected according to a comparison between the currently measured RSRP and a second threshold B corresponding to each MSG1 repetition number.
   That an appropriate MSG1 repetition number is selected according to a comparison between the currently measured RSRP and a second threshold B corresponding to each MSG1 repetition number may include the following a) to e):
   a) If a threshold Bn corresponding to An is configured, and a currently measured RSRP is less than Bn, An is selected, that is, an MSG1 repetition number corresponding to An.
      In an implementation, b) is performed if the currently measured RSRP is greater than or equal to the threshold Bn.
   b) If a threshold Bn-1 corresponding to An-1 is configured, and a currently measured RSRP is less than Bn-1, An-1 is selected.
      In an implementation, c) is performed if the currently measured RSRP is greater than or equal to the threshold Bn-1.
   c) If a threshold Bn-2 corresponding to An-2 is configured, and a currently measured RSRP is less than Bn-2, An-2 is selected.
      In an implementation, if the currently measured RSRP is greater than or equal to the threshold Bn-2, the rest can be deduced by analogy, and a threshold corresponding to a next MSG1 repetition number continues to be compared with the currently measured RSRP.
   d) If a threshold B2 corresponding to A2 is configured, and a currently measured RSRP is less than B2, A2 is selected.
   e) Otherwise, when no MSG1 repetition number is selected in each of the foregoing cases a) to d), A1 is selected.
      The foregoing process of performing a) to e) sequentially ensures that only one MSG1 repetition number can be selected according to a comparison between the measured link quality and a threshold.
2) When only resources for non-MSG1 repetition are configured or only resources for non-MSG1 repetition are configured on the selected BWP, non-MSG1 repetition is selected; or when both resources for MSG1 repetition and resources for non-MSG1 repetition are configured, or when both resources for MSG1 repetition and resources for non-MSG1 repetition are configured on the selected BWP, and the currently measured RSRP is greater than the first threshold, non-MSG1 repetition is selected; or, in an otherwise case in 1), that is, when no MSG1 repetition number is selected in each of the foregoing cases a) to d) in 1), non-MSG1 repetition is selected.

It may be learned from the descriptions in 1) and 2) that, the MSG1 repetition is selected when the currently measured RSRP is less than or equal to the first threshold, and the non-MSG1 repetition is selected when the currently measured RSRP is greater than the first threshold. Because the currently measured RSRP represents the link quality, it can be learned that when the link quality is less than the first threshold, the MSG1 repetition is selected; when the link quality is greater than the first threshold, the non-MSG1 repetition is selected.

It should be understood that, that the currently measured RSRP is less than Bn-1 means that the currently measured RSRP is less than Bn-1 and greater than Bn-2. That the currently measured RSRP is less than Bn-2 means that the currently measured RSRP is less than Bn-2 and greater than Bn-3. Other less-than relationships are similar. That the currently measured RSRP is less than B2 means that the currently measured RSRP is less than B2 and greater than B1. On the basis of this, the foregoing otherwise case is that the currently measured RSRP is less than B1 and greater than B2.

It needs to be noted that, in the above description, the RSRP is used for representing the link quality. The currently measured RSRP is merely an example for description. When the RSRP is used for representing the link quality, a threshold compared with the RSRP may be referred to as an RSRP threshold. For example, the first threshold may alternatively be described as a first RSRP threshold, and the second threshold may alternatively be described as a second RSRP threshold. In addition, in some possible designs, what is used for representing the link quality includes, but is not limited to, an RSRP, and may further include an RSSI, an SINR, and the like. When the link quality is represented by using an RSSI, a configured threshold may also be referred to as an RSSI threshold, and a currently measured RSRP may be replaced with a currently measured RSSI. When the link quality is represented by using an SINR, a configured threshold may also be referred to as an SINR threshold, and therefore a currently measured RSRP in the foregoing statement may be replaced with a currently measured SINR. That is, when the threshold is a threshold of a parameter that represents the link quality, the currently measured RSRP in the foregoing statement may be replaced with the currently measured parameter that represents the link quality.

The following provides a specific implementation process of a first feature selection method according to an embodiment of this application. It should be understood that, the specific implementation process is merely an example, and is used to provide a possible execution process of the first feature selection method. Therefore, the specific implementation process should not be understood as a limitation on the first feature selection method provided in this embodiment of this application.

FIG. 5 is a flowchart of a first feature selection method according to an embodiment of this application. As shown in FIG. 5, the process may include the following steps.

S501. Receive a threshold configured by a network side device.

It should be understood that, the network side device configures a threshold for the user terminal by using the first threshold configuration method in the foregoing embodiments. For details, refer to the foregoing embodiments. Details are not described herein.

As described above, the threshold is carried in the configuration information or the configuration parameter.

Further, optionally, the configuration information or the configuration parameter may be further used for configuring a random access resource for the random access procedure, so that the terminal further receives the configuration information from the network side device, and obtains a resource set (or referred to as a random access resource or a resource set) configured for the random access procedure.

Further, optionally, the terminal determines a configuration case of a resource set configured for the random access procedure, and selects a random access feature according to the configuration case of the resource set configured for the random access procedure and a threshold configured by the network device for the terminal. For example, when a threshold (which may be referred to as a second threshold) configured by the network device for each MSG1 repetition number other than the lowest repetition is received, MSG1 repetition is selected, and S502a is performed.

When a threshold configured by the network device for each MSG1 repetition number is received, for example, when a corresponding first threshold is configured for a lowest repetition number, and a corresponding second threshold is configured for MSG1 repetition numbers other than the lowest repetition number, S502b is performed. When the received threshold configured by the network device is null or no threshold is configured, S502c is performed: non-MSG1 repetition is selected.

Optionally, when only random access resources for MSG1 repetition are configured on the selected BWP, if the threshold corresponding to the MSG repetition number is not configured (for example, the first threshold and/or the second threshold is not configured), the MSG1 repetition number configured for the BWP is selected.

S502a. Determine an MSG1 repetition number according to a currently measured RSRP and each second threshold.

For a specific determining method, refer to the description in the foregoing 1). Details are not described herein.

When both resources for MSG1 repetition and resources for non-MSG1 repetition are configured on the BWP, the user terminal receives both the first threshold and the second threshold. The user terminal may first determine whether to select an MSG1 repetition number or a non-MSG1 repetition number according to the currently measured RSRP and the first threshold; and then, perform different steps according to a determining result, that is, S502b below.

S502b. Determine, according to the currently measured RSRP and the first threshold, whether to select MSG1 repetition. When the currently measured RSRP is less than or equal to the first threshold, MSG1 repetition is selected, and S502a is performed. When the currently measured RSRP is greater than the first threshold, S502c is performed.

That is, the method shown in FIG. 5 may be understood as the following process:
If the configuration information indicates that contention free random access resources are provided for the random access procedure, and the configuration information further indicates an MSG1 repetition number, the current random access is applicable to MSG1 repetition, and the MSG1 repetition number used in the current random access is the MSG1 repetition number indicated by the configuration information.

For example, if the configuration information indicates that the random access resource configured by the network device for the terminal is a CBRA resource and further indicates an MSG1 repetition number 2, the terminal uses MSG1 repetition when initiating random access this time, and the MSG1 repetition number is 2.

Otherwise, if the configuration information does not indicate that contention free random access resources are provided for the random access procedure, the terminal determines whether only resources for MSG1 repetition exist in the resource set on the selected BWP, and selects a feature used for the current random access procedure based on a determining result. Specifically, the following manners are included:
Manner 1. If the BWP configured for the random access procedure includes resources for MSG1 repetition and resources for non-MSG1 repetition, the non-MSG1 repetition or the MSG1 repetition is selected according to a threshold configured by the network device for the terminal.

In an example, the BWP includes resources for n MSG1 repetition numbers and resources for a non-MSG1 repetition number. Thresholds configured by the network device for the terminal include n-2 second thresholds. A second threshold is used for distinguishing whether to select MSG1 repetition resources corresponding to the second threshold, and the n second thresholds correspond to the n MSG1 repetition numbers X. The example may include:
a) If a second threshold X' corresponding to the MSG1 repetition number X is configured, and the signal quality is less than X', the MSG1 repetition number X is selected;
b) if a second threshold X-1' corresponding to the MSG1 repetition number X-1 is configured, and the signal quality is less than X-1', the MSG1 repetition number X-1 is selected;
c) if a second threshold X-2' corresponding to the MSG1 repetition number X-2 is configured, and the signal quality is less than X-2', the MSG1 repetition number X-2 is selected;
   by analogy, a second threshold corresponding to each MSG1 repetition number is traversed until a 2nd MSG1 repetition number in ascending order of the MSG1 repetition numbers, where if the signal quality is less than the 2nd MSG1 repetition number, the 2nd MSG1 repetition number is selected; otherwise, if the signal quality is greater than or equal to the 2nd MSG1 repetition number, d) is performed:
d) if a second threshold 1' corresponding to the MSG1 repetition number 1 is configured, and the signal quality is less than 1', the MSG1 repetition number 1 is selected.

Otherwise, if none of the foregoing a) to d) is satisfied, that is, if the signal quality is not less than a second threshold corresponding to any MSG1 repetition number, MSG1 repetition is not selected, and non-MSG1 repetition is selected to initiate random access; or if the signal quality is less than the second threshold 1' corresponding to the lowest MSG1 repetition number, MSG1 repetition is not selected, and non-MSG1 repetition is selected to initiate random access.

For example, an example in which the MSG1 repetition numbers include 2, 4, and 8 and the signal quality is an RSRP of a downlink path loss reference signal is used. If resources for the Msgl repetition number 8 are configured on the BWP, and the RSRP of the downlink path loss reference signal is less than rsrp-ThresholdMsg1-RepetitionNum8, the terminal selects the MSG1 repetition when initiating random access this time, and the MSG1 repetition number is 8. If resources for the Msgl repetition number 4 are configured on the BWP, and the RSRP of the downlink path loss reference signal is less than rsrp-ThresholdMsg1-RepetitionNum4, the terminal selects the MSG1 repetition when initiating random access this time, and the MSG1 repetition number is 4. If resources for the Msg1 repetition number 2 are configured on the BWP, and the RSRP of the downlink path loss reference signal is less than rsrp-ThresholdMsg1-RepetitionNum2, the terminal selects the MSG1 repetition when initiating random access this time, and the MSG1 repetition number is 2. Otherwise, if the RSRP of the downlink path loss reference signal is not less than a threshold rsrp-ThresholdMsg1-RepetitionNumX corresponding to any MSG1 repetition number X, the terminal determines that the currently initiated random access does not apply to MSG1 repetition, that is, applies to non-MSG1 repetition.

In another example, the BWP includes resources for n MSG1 repetition numbers and resources for a non-MSG1 repetition number. Thresholds configured by the network device for the terminal include n-1 second thresholds and one second threshold. A second threshold is used for distinguishing whether to select MSG1 repetition resources corresponding to the second threshold, and the one first threshold is used for distinguishing whether to select MSG1 repetition. It should be understood that, the first threshold may be considered as a threshold corresponding to a lowest MSG1 repetition number. In the example, non-MSG1 repetition is selected if the signal quality is greater than or equal to the first threshold. MSG1 repetition is selected if the signal quality is less than the first threshold. In addition, an MSG1 repetition number is selected based on the following processes a) to d):
a) If a second threshold X' corresponding to the MSG1 repetition number X is configured, and the signal quality is less than X', the MSG1 repetition number X is selected;
b) if a second threshold X-1' corresponding to the MSG1 repetition number X-1 is configured, and the signal quality is less than X-1', the MSG1 repetition number X-1 is selected;
c) if a second threshold X-2' corresponding to the MSG1 repetition number X-2 is configured, and the signal quality is less than X-2', the MSG1 repetition number X-2 is selected;
   by analogy, a second threshold corresponding to each MSG1 repetition number is traversed until a 2nd MSG1 repetition number in ascending order of the MSG1 repetition numbers, where if the signal quality is less than the 2nd MSG1 repetition number, the 2nd MSG1 repetition number is selected; otherwise, if the signal quality is greater than or equal to the 2nd MSG1 repetition number, or the signal quality is not less than any second threshold, d) is performed:
d) the 1st MSG1 repetition number is selected, that is, the lowest MSG1 repetition number is selected.

For example, an example in which the MSG1 repetition numbers include 2, 4, and 8 and the signal quality is an RSRP of a downlink path loss reference signal is used. The thresholds configured by the network device for the terminal include one first threshold and two second thresholds: rsrp-ThresholdMsg1-RepetitionNum8 and rsrp-ThresholdMsg1-RepetitionNum4. If the RSRP of the downlink path loss reference signal is not less than (greater than or equal to) the first threshold, the terminal does not select MSG1 repetition but selects non-MSG1 repetition when initiating random access this time. Otherwise, if the RSRP of the downlink path loss reference signal is less than the first threshold, and if resources for the Msg1 repetition number 8 are configured on the BWP, and the RSRP of the downlink path loss reference signal is less than rsrp-ThresholdMsg1-RepetitionNum8, the terminal selects the MSG1 repetition when initiating random access this time, and the MSG1 repetition number is 8. If resources for the Msgl repetition number 4 are configured on the BWP, and the RSRP of the downlink path loss reference signal is less than rsrp-ThresholdMsg1-RepetitionNum4, the terminal selects the MSG1 repetition when initiating random access this time, and the MSG1 repetition number is 4. If the RSRP of the downlink path loss reference signal is not less than rsrp-ThresholdMsg1-RepetitionNum4, the terminal selects the MSG1 repetition when initiating random access this time, and the MSG1 repetition number is 2.

Manner 2. If the BWP configured for the random access procedure includes only resources for MSG1 repetition, the terminal determines that the current random access procedure is applicable to MSG1 repetition, and selects an MSG1 repetition number to initiate random access.

As described above, when the BWP configured for the random access procedure includes only resources for MSG1 repetition, only resources for an MSG1 repetition number may be included, or resources for at least two MSG1 repetition numbers may be included. In this case, the thresholds configured by the network device for the terminal may include at least one threshold rsrp-ThresholdMsg1-RepetitionNumX, or may not include a rsrp-ThresholdMsg1-RepetitionNumX. When the thresholds include at least one threshold rsrp-ThresholdMsg1-RepetitionNumX, S504 may include the following two examples:
In an example, thresholds configured by the network device for the terminal include n second thresholds. A second threshold is used for distinguishing whether to select MSG1 repetition resources corresponding to the second threshold, and the n second thresholds correspond to the n MSG1 repetition numbers X. The following steps a) to d) are included:
a) If a second threshold X' corresponding to the MSG1 repetition number X is configured, and the signal quality is less than X', the MSG1 repetition number X is selected to initiate random access;
b) if a second threshold X-1' corresponding to the MSG1 repetition number X-1 is configured, and the signal quality is less than X-1', the MSG1 repetition number X-1 is selected to initiate random access;
c) if a second threshold X-2' corresponding to the MSG1 repetition number X-2 is configured, and the signal quality is less than X-2', the MSG1 repetition number X-2 is selected to initiate random access;
   by analogy, a second threshold corresponding to each MSG1 repetition number is traversed until a 2nd MSG1 repetition number in ascending order of the MSG1 repetition numbers, where if the signal quality is less than the 2nd MSG1 repetition number, the 2nd MSG1 repetition number is selected; otherwise, if the signal quality is greater than or equal to the 2nd MSG1 repetition number, d) is performed:
d) if a second threshold 1' corresponding to the MSG1 repetition number 1 is configured, and the signal quality is less than 1', the MSG1 repetition number 1 is selected.

Otherwise, if none of the foregoing a) to d) is satisfied, that is, if the signal quality (or referred to as the RSRP of the downlink path loss reference signal) is not less than a threshold rsrp-ThresholdMsg1-RepetitionNumX corresponding to any MSG1 repetition number X, the terminal determines that the MSG1 repetition number for initiating the random access procedure this time is the lowest MSG1 repetition number configured for the BWP.

In this application, if the network device does not configure the threshold rsrp-ThresholdMsg1-RepetitionNumX for the terminal, the MSG1 repetition number in this random random access procedure is an MSG1 repetition number related to resources configured on the BWP.

For example, an example in which the MSG1 repetition numbers include 2, 4, and 8 and the signal quality is an RSRP of a downlink path loss reference signal is used. If the configuration information includes one threshold rsrp-ThresholdMsg1-RepetitionNum8, and the RSRP of the downlink path loss reference signal is less than rsrp-ThresholdMsg1-RepetitionNum8, the terminal uses the MSG1 repetition when initiating random access this time, and the MSG1 repetition number is 8. If the configuration information includes one threshold rsrp-ThresholdMsg1-RepetitionNum4, and the RSRP of the downlink path loss reference signal is less than rsrp-ThresholdMsg1-RepetitionNum4, the terminal uses the MSG1 repetition when initiating random access this time, and the MSG1 repetition number is 4. If the configuration information includes one threshold rsrp-ThresholdMsg1-RepetitionNum2, and the RSRP of the downlink path loss reference signal is less than rsrp-ThresholdMsg1-RepetitionNum2, the terminal uses the MSG1 repetition when initiating random access this time, and the MSG1 repetition number is 2. Otherwise, if the RSRP of the downlink path loss reference signal is not less than any threshold, a lowest MSG1 repetition number is selected to initiate random access.

In another example, the BWP includes resources for n MSG1 repetition numbers and resources for a non-MSG1 repetition number. Thresholds configured by the network device for the terminal include n-1 second thresholds. A second threshold is used for distinguishing whether to select MSG1 repetition resources corresponding to the second threshold. In the example, the following processes a) to d) may be included:
a) If a second threshold X' corresponding to the MSG1 repetition number X is configured, and the signal quality is less than X', the MSG1 repetition number X is selected;
b) if a second threshold X-1' corresponding to the MSG1 repetition number X-1 is configured, and the signal quality is less than X-1', the MSG1 repetition number X-1 is selected;
c) if a second threshold X-2' corresponding to the MSG1 repetition number X-2 is configured, and the signal quality is less than X-2', the MSG1 repetition number X-2 is selected;
   by analogy, a second threshold corresponding to each MSG1 repetition number is traversed until a 2nd MSG1 repetition number in ascending order of the MSG1 repetition numbers, where if the signal quality is less than the 2nd MSG1 repetition number, the 2nd MSG1 repetition number is selected; otherwise, if the signal quality is greater than or equal to the 2nd MSG1 repetition number, or the signal quality is not less than any second threshold, d) is performed:
d) the 1st MSG1 repetition number is selected, that is, the lowest MSG1 repetition number is selected.

For example, an example in which the MSG1 repetition numbers include 2, 4, and 8 and the signal quality is an RSRP of a downlink path loss reference signal is used. The thresholds configured by the network device for the terminal include two second thresholds: rsrp-ThresholdMsg1-RepetitionNum8 and rsrp-ThresholdMsg1-RepetitionNum4. If resources for the MSG1 repetition number 8 are configured on the BWP, and the RSRP of the downlink path loss reference signal is less than rsrp-ThresholdMsg1-RepetitionNum8, the terminal selects the MSG1 repetition when initiating random access this time, and the MSG1 repetition number is 8. If resources for the MSG1 repetition number 4 are configured on the BWP, and the RSRP of the downlink path loss reference signal is less than rsrp-ThresholdMsg1-RepetitionNum4, the terminal selects the MSG1 repetition when initiating random access this time, and the MSG1 repetition number is 4. If the RSRP of the downlink path loss reference signal is not less than rsrp-ThresholdMsg1-RepetitionNum4, the terminal selects the MSG1 repetition when initiating random access this time, and the MSG1 repetition number is 2.

Manner 3. If the resource set on the BWP includes only resources for non-MSG1 repetition, non-MSG1 repetition is selected.

The following describes a first feature selection method according to an embodiment of this application by using the three cases shown in FIG. 2 as an example.

In Case 1 shown in FIG. 2, only resources for MSG1 repetition are configured on the BWP, and the network side device configures a corresponding threshold 2 for the MSG1 repetition 4, and configures a corresponding threshold 3 for the MSG1 repetition 8. The user terminal selects the MSG1 repetition 4 when the currently measured RSRP is less than the threshold 2 and greater than the threshold 3; selects the MSG1 repetition 8 when the currently measured RSRP is less than the threshold 3; and selects the MSG1 repetition 2 when the currently measured RSRP is greater than the threshold 2.

In Case 2 shown in FIG. 2, both resources for MSG1 repetition and resources for non-MSG1 repetition are configured on the BWP, and the network side device configures a threshold 1, where the threshold 1 is used for selecting MSG1 repetition or non-MSG1 repetition, configures a corresponding threshold 2 for the MSG1 repetition 4, and configures a corresponding threshold 3 for the MSG1 repetition 8. The user terminal selects non-MSG1 repetition when the currently measured RSRP is greater than the threshold 1; and selects MSG1 repetition when the currently measured RSRP is less than the threshold 1. Further, the user terminal selects the MSG1 repetition 4 when the currently measured RSRP is less than the threshold 2 and greater than the threshold 3; and selects the MSG1 repetition 8 when the currently measured RSRP is less than the threshold 3; and otherwise, selects the MSG1 repetition 2.

In Case 3 shown in FIG. 2, only resources for MSG1 repetition are configured on the BWP, and the network side device configures no threshold. The user terminal directly selects non-MSG1 repetition.

It may be learned based on the foregoing description that, according to the first feature selection method provided in this embodiment of this application, MSG1 repetition or non-MSG1 repetition can be selected based on a threshold (for example, the first threshold) configured by the network side. Further, when MSG1 repetition is selected, an appropriate MSG1 repetition number is selected according to a threshold (for example, the second threshold) configured by the network side.

The foregoing describes the first threshold configuration method and the first feature selection method that are provided in the embodiments of this application. The following describes a second threshold configuration method and a second feature selection method corresponding to the second threshold configuration method provided in the embodiments of this application.

The second threshold configuration method may be stated as follows: Configure a second threshold. The second threshold is used for distinguishing MSG1 repetition numbers, or an alternative description is that the second threshold is used for determining an MSG1 repetition number.

Specifically, there are a plurality of MSG1 repetition numbers, and corresponding second thresholds are respectively configured for different MSG1 repetition numbers.

For example, n MSG1 repetition numbers are configured, and different MSG1 repetition numbers are sequentially referred to as A1, A2, ..., and An in ascending order of repetition numbers. Therefore, the network side device may respectively configure corresponding thresholds for A1 to An. In this embodiment, these thresholds are all used for distinguishing different MSG1 repetition numbers, and therefore may each be referred to as a second threshold.

The following describes a second feature selection method according to an embodiment of this application. As described in the foregoing embodiments, the premise that the user terminal performs the second feature selection method is that the network side device configures a threshold for each MSG1 repetition number by using the second threshold configuration method.

The second feature selection method may be stated as follows: An MSG1 repetition number is selected according to a currently measured RSRP and a second threshold.

It should be particularly noted that, the second threshold in the second feature selection method and the second threshold configuration method has a meaning different from that of the second threshold in the first feature selection method and the first threshold configuration method. In the second feature selection method and the second threshold configuration method, each threshold configured for an MSG1 repetition number is referred to as a second threshold. For example, in the second feature selection method and the second threshold configuration method, a threshold configured for a lowest repetition number is also referred to as a second threshold. In this case, the threshold configured for the lowest repetition number is used for selecting an MSG1 repetition number rather than selecting MSG1 repetition or non-MSG1 repetition. Details are not described below again.

For example, n MSG1 repetition numbers are configured, and different MSG1 repetition numbers are sequentially referred to as A1, A2, ..., and An in ascending order of repetition numbers. The network side device configures a threshold B1 for A1, configures a threshold B2 for A2, configures a threshold B3 for A3, ..., and configures a threshold Bn for An. Therefore, the second feature selection method may be stated as follows:
2.1) When only resources for MSG1 repetition are configured on the BWP:
a) If a threshold Bn corresponding to An is configured, and a currently measured RSRP is less than Bn, An is selected, that is, an MSG1 repetition number corresponding to An. b) is performed if the currently measured RSRP is greater than or equal to the threshold Bn.
b) If a threshold Bn-1 corresponding to An-1 is configured, and a currently measured RSRP is less than Bn-1, An-1 is selected. c) is performed if the currently measured RSRP is greater than or equal to the threshold Bn-1.
c) If a threshold Bn-2 corresponding to An-2 is configured, and a currently measured RSRP is less than Bn-2, An-2 is selected. If the currently measured RSRP is greater than or equal to the threshold Bn-2, the rest can be deduced by analogy, and a threshold corresponding to a next MSG1 repetition number continues to be compared with the currently measured RSRP.
d) If a threshold B2 corresponding to A2 is configured, and a currently measured RSRP is less than B2, A2 is selected.
e) If a threshold B1 corresponding to A1 is configured, and a currently measured RSRP is less than B1, A1 is selected.

Otherwise, when no MSG1 repetition number is selected in each of the foregoing cases a) to e), an MSG1 repetition number whose repetition number is smallest is selected.

2.2) When both resources for MSG1 repetition and resources for non-MSG1 repetition are configured on the BWP, and the currently measured RSRP is less than or equal to the second threshold corresponding to the lowest repetition number, MSG1 repetition is selected. Further, an appropriate MSG1 repetition number is selected with reference to performing the foregoing 2.1).

In an example, the BWP includes resources for n MSG1 repetition numbers and resources for a non-MSG1 repetition number. Thresholds configured by the network device for the terminal include n-2 second thresholds. A second threshold is used for distinguishing whether to select MSG1 repetition resources corresponding to the second threshold, and the n second thresholds correspond to the n MSG1 repetition numbers X. The example may include:
a) If a second threshold X' corresponding to the MSG1 repetition number X is configured, and the signal quality is less than X', the MSG1 repetition number X is selected;
b) if a second threshold X-1' corresponding to the MSG1 repetition number X-1 is configured, and the signal quality is less than X-1', the MSG1 repetition number X-1 is selected;
c) if a second threshold X-2' corresponding to the MSG1 repetition number X-2 is configured, and the signal quality is less than X-2', the MSG1 repetition number X-2 is selected;
   by analogy, a second threshold corresponding to each MSG1 repetition number is traversed until a 2nd MSG1 repetition number in ascending order of the MSG1 repetition numbers, where if the signal quality is less than the 2nd MSG1 repetition number, the 2nd MSG1 repetition number is selected; otherwise, if the signal quality is greater than or equal to the 2nd MSG1 repetition number, d) is performed:
d) if a second threshold 1' corresponding to the MSG1 repetition number 1 is configured, and the signal quality is less than 1', the MSG1 repetition number 1 is selected.

Otherwise, if none of the foregoing a) to d) is satisfied, that is, if the signal quality is not less than a second threshold corresponding to any MSG1 repetition number, MSG1 repetition is not selected, and non-MSG1 repetition is selected to initiate random access; or if the signal quality is less than the second threshold 1' corresponding to the lowest MSG1 repetition number, MSG1 repetition is not selected, and non-MSG1 repetition is selected to initiate random access.

2.3) When only resources for non-MSG1 repetition are configured on the BWP, or when both resources for MSG1 repetition and resources for non-MSG1 repetition are configured on the BWP, and the currently measured RSRP is greater than the second threshold corresponding to the lowest repetition number, non-MSG1 repetition is selected.

It is assumed below that the MSG1 repetition numbers include MSG1 repetition 2, MSG1 repetition 4, and MSG1 repetition 8. A second feature selection method according to an embodiment of this application is described by using the three cases shown in FIG. 2 as an example.

In Case 1 shown in FIG. 2, only resources for MSG1 repetition are configured on the BWP, the network side device configures a corresponding threshold 1 for the MSG1 repetition 2, and the network side device configures a corresponding threshold 2 for the MSG1 repetition 4, and configures a corresponding threshold 3 for the MSG1 repetition 8. The user terminal selects the MSG1 repetition 2 when the currently measured RSRP is less than the threshold 1 and greater than the threshold 2; selects the MSG1 repetition 4 when the currently measured RSRP is less than the threshold 2 and greater than the threshold 3; selects the MSG1 repetition 8 when the currently measured RSRP is less than the threshold 3; and otherwise, selects an MSG1 repetition number whose repetition number is the smallest from the configured MSG1 repetition numbers, that is, MSG1 repetition 2.

In Case 2 shown in FIG. 2, both resources for MSG1 repetition and resources for non-MSG1 repetition are configured on the BWP, and the network side device configures a corresponding threshold 1 for the MSG1 repetition 2, configures a corresponding threshold 2 for the MSG1 repetition 4, and configures a corresponding threshold 3 for the MSG1 repetition 8. The user terminal selects the MSG1 repetition 2 when the currently measured RSRP is less than the threshold 1 and greater than the threshold 2; selects the MSG1 repetition 4 when the currently measured RSRP is less than the threshold 2 and greater than the threshold 3; selects the MSG1 repetition 8 when the currently measured RSRP is less than the threshold 3; and selects non-MSG1 repetition when the currently measured RSRP is greater than the threshold 1.

That is, in Case 2 shown in FIG. 2, an example in which the MSG1 repetition numbers include 2, 4, and 8 and the signal quality is an RSRP of a downlink path loss reference signal is used. If resources for the Msg1 repetition number 8 are configured on the BWP, and the RSRP of the downlink path loss reference signal is less than rsrp-ThresholdMsg1-RepetitionNum8, the terminal selects the MSG1 repetition when initiating random access this time, and the MSG1 repetition number is 8. If resources for the Msgl repetition number 4 are configured on the BWP, and the RSRP of the downlink path loss reference signal is less than rsrp-ThresholdMsg1-RepetitionNum4, the terminal selects the MSG1 repetition when initiating random access this time, and the MSG1 repetition number is 4.

If resources for the Msg1 repetition number 2 are configured on the BWP, and the RSRP of the downlink path loss reference signal is less than rsrp-ThresholdMsg1-RepetitionNum2, the terminal selects the MSG1 repetition when initiating random access this time, and the MSG1 repetition number is 2. Otherwise, if the RSRP of the downlink path loss reference signal is not less than a threshold rsrp-ThresholdMsg1-RepetitionNumX corresponding to any MSG1 repetition number X, the terminal determines that the currently initiated random access does not apply to MSG1 repetition, that is, applies to non-MSG1 repetition.

In Case 3 shown in FIG. 2, only resources for non-MSG1 repetition are configured on the BWP. In this case, the network side device configures no threshold. The user terminal directly selects non-MSG1 repetition.

It may be learned based on the foregoing description that according to the second feature selection method provided in this embodiment of this application, the user terminal can distinguish, based on the second threshold corresponding to the lowest repetition number configured by the network side, MSG1 repetition or non-MSG1 repetition, which helps the user terminal side select MSG1 repetition or non-MSG1 repetition. In addition, in a case of MSG1 repetition, an appropriate MSG1 repetition number is again selected based on the second threshold.

In some other possible scenarios, CFRA random access resources are configured on the BWP. MSG1 repetition numbers are configured on a CFRA resource set, where the MSG1 repetition numbers include one or more repetition numbers. When MSG1 repetition includes one repetition number, the repetition number is applied to a PRACH (Physical Random Access Channel, Physical Random Access Channel) resource set configured in the CFRA resource set. When MSG1 repetition includes a plurality of repetition numbers, the PRACH resource set configured in the CFRA resource set may be partitioned (partition) to the plurality of repetition numbers. In this manner, the partition may be performed through a RACH occasion or a preamble.

In this embodiment of this application, when MSG1 repetition includes a plurality of repetition numbers, the first threshold and the second threshold in the foregoing embodiments may be used to distinguish which repetition number is applied, and which repetition number is applied or which repetition number is not applied is determined according to the RSRP. A detailed description is provided below.

The embodiments of this application further provide a CFRA resource related threshold configuration method and feature selection method. The CFRA resource related threshold configuration method includes a third threshold configuration method and a fourth threshold configuration method. Correspondingly, the CFRA resource related feature selection method includes a third feature selection method and a fourth feature selection method. The third feature selection method corresponds to the third threshold configuration method, and the fourth feature selection method corresponds to the fourth threshold configuration method. That is, when the network side device performs the third threshold configuration method, the user terminal may perform the third feature selection method. When the network side device performs the fourth threshold configuration method, the user terminal may perform the fourth feature selection method.

The third threshold configuration method may be stated as follows: A first threshold and a second threshold are configured. The first threshold is used for distinguishing MSG1 repetition, or an alternative description is that the first threshold is used for distinguishing whether to perform MSG1 repetition, or an alternative description is that the first threshold is used for determining whether to select MSG1 repetition. The second threshold is used for distinguishing MSG1 repetition numbers.

It should be understood that, a difference between the third threshold configuration method and the first threshold configuration method lies in that the third threshold configuration method is only for CFRA random access resources. Therefore, for the second threshold, the first threshold, and each step in the third threshold configuration method, refer to the descriptions for the first threshold configuration method in the foregoing embodiments. Details are not described herein again.

The fourth threshold configuration method may be stated as follows: A second threshold is configured. The second threshold is used for distinguishing MSG1 repetition numbers, or an alternative description is that the second threshold is used for determining an MSG1 repetition number.

It should be understood that, a difference between the fourth threshold configuration method and the second threshold configuration method lies in that the fourth threshold configuration method is only for CFRA random access resources. Therefore, for the second threshold and each step in the fourth threshold configuration method, refer to the descriptions for the first threshold configuration method in the foregoing embodiments. Details are not described herein again.

Corresponding to the third threshold configuration method, the third feature selection method may be stated as follows: Based on the currently measured RSRP, MSG1 repetition or non-MSG1 repetition is selected according to a first threshold, and an MSG1 repetition number is selected according to a second threshold.

Specifically, using an example in which there are n MSG1 repetition numbers: A1, A2, ..., An, and second thresholds corresponding to A2, ..., and An are respectively B2, ..., and Bn, the third feature selection method may be stated as follows:
3.1) When only resources for MSG1 repetition are configured on the CFRA, or an MSG1 repetition resource set and a non-MSG1 repetition resource set are configured on the CFRA and a measured RSRP is less than or equal to a first threshold:
That an appropriate MSG1 repetition number is selected according to a comparison between the currently measured RSRP and a second threshold B corresponding to each MSG1 repetition number may include the following 3.1a) to 3.1e):
3.1a) If a threshold Bn corresponding to An is configured, and a currently measured RSRP is less than Bn, An is selected, that is, an MSG1 repetition number corresponding to An. 3.1b) is performed if the currently measured RSRP is greater than or equal to the threshold Bn.
3.1b) If a threshold Bn-1 corresponding to An-1 is configured, and a currently measured RSRP is less than Bn-1, An-1 is selected. 3.1c) is performed if the currently measured RSRP is greater than or equal to the threshold Bn-1.
3.1c) If a threshold Bn-2 corresponding to An-2 is configured, and a currently measured RSRP is less than Bn-2, An-2 is selected. If the currently measured RSRP is greater than or equal to the threshold Bn-2, the rest can be deduced by analogy, and a threshold corresponding to a next MSG1 repetition number continues to be compared with the currently measured RSRP.
3.1d) If a threshold B2 corresponding to A2 is configured, and a currently measured RSRP is less than B2, A2 is selected.
3.1e) Otherwise, when no MSG1 repetition number is selected in each of the foregoing cases 3.1a) to 3.1d), A1 is selected.
3.2 When only resources for non-MSG1 repetition are configured on the CFRA, or When both resources for MSG1 repetition and resources for non-MSG1 repetition are configured on the CFRA, and the currently measured RSRP is greater than the first threshold, or in the otherwise case of 3.1), that is, when no MSG1 repetition number is selected in each of the cases 3.1a) to 3.1d) of 3.1), 3.2a) is performed.
3.2a) Non-MSG1 repetition is selected.

For the second threshold, the first threshold, and each step in the third feature selection method, refer to the descriptions for the first feature selection method in the foregoing embodiments. Details are not described herein again.

The fourth feature selection method provided in this embodiment of this application may be stated as follows: An MSG1 repetition number is selected according to a currently measured RSRP and a second threshold.

Specifically, using an example in which there are n MSG1 repetition numbers: A1, A2, ..., An, and second thresholds corresponding to A2, ..., and An are respectively B2, ..., and Bn, the fourth feature selection method may be stated as follows:
4.1) When only resources for MSG1 repetition are configured on the CFRA:
4.1a) If a threshold Bn corresponding to An is configured, and a currently measured RSRP is less than Bn, An is selected, that is, an MSG1 repetition number corresponding to An. 4.1b) is performed if the currently measured RSRP is greater than or equal to the threshold Bn.
4.1b) If a threshold Bn-1 corresponding to An-1 is configured, and a currently measured RSRP is less than Bn-1, An-1 is selected. 4.1c) is performed if the currently measured RSRP is greater than or equal to the threshold Bn-1.
4.1c) If a threshold Bn-2 corresponding to An-2 is configured, and a currently measured RSRP is less than Bn-2, An-2 is selected. If the currently measured RSRP is greater than or equal to the threshold Bn-2, the rest can be deduced by analogy, and a threshold corresponding to a next MSG1 repetition number continues to be compared with the currently measured RSRP.
4.1d) If a threshold B2 corresponding to A2 is configured, and a currently measured RSRP is less than B2, A2 is selected.
4.1e) If a threshold B1 corresponding to A1 is configured, and a currently measured RSRP is less than B1, A1 is selected.
4.1f) Otherwise, when no MSG1 repetition number is selected in each of the foregoing cases a) to e), an MSG1 repetition number whose repetition number is smallest is selected.
4.2) When both resources for MSG1 repetition and resources for non-MSG1 repetition are configured on the CFRA, and the currently measured RSRP is less than or equal to the second threshold corresponding to the lowest repetition number, MSG1 repetition is selected. Further, an appropriate MSG1 repetition number is selected with reference to performing the foregoing 4.1).
4.3) When only resources for non-MSG1 repetition are configured on the BWP, or when both resources for MSG1 repetition and resources for non-MSG1 repetition are configured on the BWP, and the currently measured RSRP is greater than the second threshold corresponding to the lowest repetition number, non-MSG1 repetition is selected, that is, 4.3a) is performed.
4.3a) Non-MSG1 repetition is selected. For the second threshold and each step in the fourth feature selection method, refer to the descriptions for the second feature selection method in the foregoing embodiments. Details are not described herein again.

The foregoing is description for the threshold configuration method and the feature selection method provided in the embodiments of this application.

After the user terminal selects a feature, that is, determines an MSG1 repetition number, the user terminal needs to determine a resource set corresponding to the MSG1 repetition number. An existing resource set determining method is described as follows:
3.1) When no CFRA (Contention Free Random Access, Contention Free Random Access) resource is configured, and one or more features (or referred to as random access features) are selected:
3.1.a) If there is no resource set related to the selected features, a resource set not associated with any feature is selected.
3.1.b) If there is one resource set associated with all the selected features, the resource set is selected.
3.1.c) If there are one or more resource sets associated with a subset of all the selected features, the resource sets are selected according to priorities.
3.2) When CFRA resources are configured, and RedCap is applied to the current random access procedure:
3.2.a) If only resources for RedCap are configured on one resource set, the resource set is selected.
3.3) Otherwise, when a resource set is selected in neither 3.1) nor 3.2), a resource set not associated with any feature is selected.

In this application, for the case in which no CFRA resource is configured, after an MSG1 repetition number is determined, a resource set may be determined according to an existing mechanism. For example, an appropriate resource set is selected according to 3.1) to 3.3). When a CFRA resource is configured, when CFRA falls back to CBRA (Contention Based Random Access, Contention Based Random Access), a common resource is selected, that is, a resource not associated with any feature is selected. For MSG1 repetition (MSG1 repetition), if MSG1 repetition is configured in a case of a CFRA resource, during fallback to CBRA, a resource set associated with MSG1 repetition should be similarly selected if a resource for MSG1 repetition is configured on CBRA to increase a success rate of random access. Therefore, fallback from the CFRA to the CBRA of the MSG1 repetition should be supported. In addition, the current protocol supports fallback from CFRA to CBRA of the RedCap. Based on the two points, a resource set selection procedure in which CFRA falls back to CBRA when such two features as MSG1 repetition and RedCap are applied to a random access procedure should be considered.

Based on this, an embodiment of this application provides a resource set selection method. The resource set selection method is applicable to a resource set selection procedure of an MSG1 repetition feature in a scenario of fallback from CFRA to CBRA, and is also applicable to a resource set selection procedure in which both MSG1 repetition and RedCap are applied to a random access procedure. Specific description is provided below.

In the resource set selection method provided in this embodiment of this application, when CFRA falls back to CBRA, that is, when a CFRA resource is configured, a resource set is selected according to the following two principles: Principle 1: A resource set is associated with only a subset or a subordinate set of selected and fallbackable features. Principle 2: When a plurality of resource sets of the resource sets satisfying the principle 1 are available, a resource set is selected by using feature priorities.

A selected and fallbackable feature includes that the feature is selected by the current random access and is fallbackable. The feature is selected by the current random access, and it is required that if the feature is not selected, a resource set associated with the feature is not selected. That the feature is fallbackable means that the feature can fall back from the CFRA to the CBRA, or may be understood as that the feature supports fallback from the CFRA to the CBRA. That is, when a CFRA resource is configured, a resource set associated with the feature may be selected during resource set selection. The fallbackable feature may be but is not limited to MSG1 repetition and RedCap, to ensure that other features should not be affected during resource fallback. The subset of the selected and fallbackable features refers to one or more features of the selected and fallbackable features. That a resource set is associated with only a subset or a subordinate set of selected and fallbackable features means that the selected resource set should be associated with only a subset or a subordinate set of selected and fallbackable features.

On this basis, the resource set selection method may also be stated as follows: If none of the configured resource sets satisfies the principle 1, a resource set that is not associated with any feature is selected. If there is only one resource set that satisfies the principle 1, the resource set is selected. If there is a plurality of resource sets that satisfies the principle 1, a resource set is selected according to feature priorities.

It needs to be noted that, a method for selecting a resource set based on a feature priority is consistent with a method for selecting a resource set based on a feature priority in the 38.321 V17.2.0 version in the conventional technology, including a method for selecting a resource set based on a feature priority in a subsequent evolved version. Details are not described again below.

In addition, that a resource set is associated with a feature means that the resource set includes a resource associated with the feature, or an indication of the feature is configured for the resource set. For example, the resource set associated with the MSG1 repetition 2 includes a resource corresponding to the MSG1 repetition 2 or an indication of the MSG1 repetition 2 is configured for the resource set; and when the resource set is associated with a feature, the resource set may be used for a random access procedure to which the feature is applied.

The foregoing is a core idea of the resource set selection method provided in this embodiment of this application. During specific implementation, the resource set selection method may have the following execution procedure. It should be understood that, the specific implementation process is merely an example, and is used to provide a possible execution process of the resource set selection method. Therefore, the specific implementation process should not be understood as a limitation on the resource set selection method provided in this embodiment of this application.

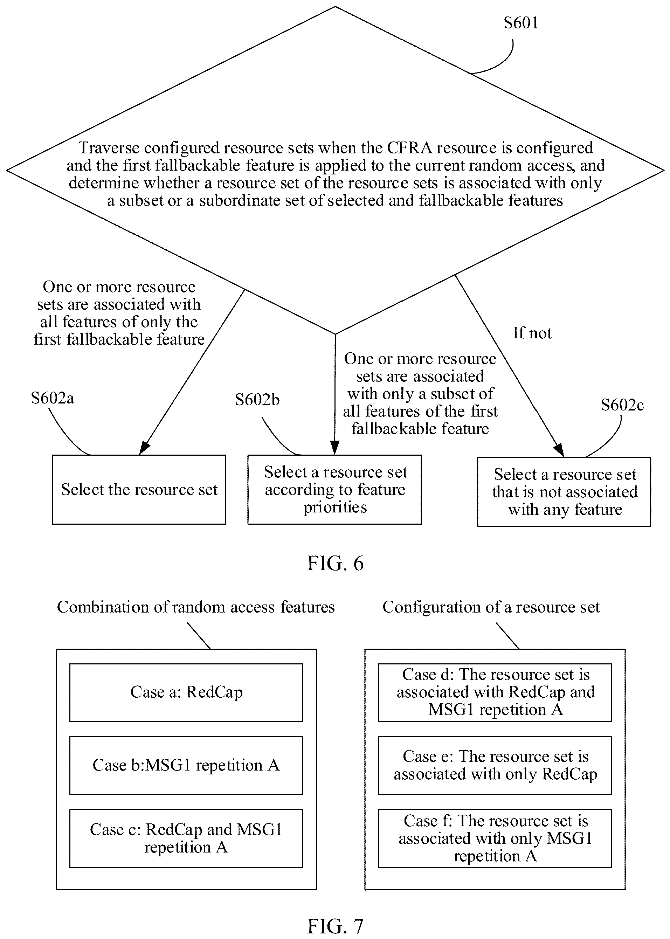

FIG. 6 is a flowchart of a resource set selection method according to an embodiment of this application. The resource set selection method can be performed on the premise that a CFRA resource is configured, and a first fallbackable feature is applied to current random access. The first fallbackable feature includes one or more features. For example, the first fallbackable feature may include one or more of MSG1 repetition and RedCap.

As shown in FIG. 6, the process may include the following steps.

Optionally, whether a CFRA resource is configured is determined.

If no CFRA resource is configured, and at least one feature is selected, the following 2a) to 2c) are performed:
2a) If no resource set related to the selected features is configured, a resource set not associated with any feature is selected as an (available) resource set to initiate random access.
2b) If there is one resource set associated with all the selected features, the resource set is selected as an available resource set to initiate random access.
2c) If there are one or more resource sets associated with a subset of all the selected features, the resource sets are selected according to priorities of the features to initiate random access. A resource set associated with a feature with a high priority is selected to initiate random access.

For example, it is assumed that a priority of MSG1 repetition is higher than those of other features. When resource sets configured by the network device include a plurality of resource sets, the plurality of resource sets is used for indicating all features triggering the random access procedure, and the MSG1 repetition is applicable to this random access procedure, a resource set related to a highest MSG1 repetition number is selected from the plurality of resource sets as an available resource set to initiate the random access.

The CFRA resource is configured, and the first fallbackable feature is applied to the current random access. The first fallbackable feature includes one or more features.

S601. Traverse configured resource sets when the CFRA resource is configured and the first fallbackable feature is applied to the current random access, and determine whether a resource set of the resource sets is associated with only a subset or a subordinate set of selected and fallbackable features. If one or more resource sets are associated with all features of only the first fallbackable feature, S602a is performed to select the resource set.

When the CFRA resource is configured, and the first fallbackable feature is applied to the current random access, if one or more resource sets are associated with only a subset of all features of the first fallbackable feature, S602b is performed to select a resource set according to feature priorities. If not, S602c is performed.

S602a. Select the resource set.

S602b. Select a resource set according to feature priorities.

If not, it indicates that no resource set of the configured resource sets is associated with only a subset or a subordinate set of selected and fallbackable features. Therefore, a resource set that is not associated with any feature may be selected, that is, S602c below.

S602c. Select a resource set that is not associated with any feature.

In this application, the fallbackable feature includes MSG1 repetition and RedCap, and the non-fallbackable feature includes SDT and the like.

In this application, the foregoing feature that is used for random access and that is selected based on the threshold, for example, the selected non-MSG1 repetition (such as RedCap) and/or MSG1 repetition feature, may refer to a feature that can be applied to a current random access procedure.

It can be known from S601 to S602c that, if the CFRA resource is configured, the following 3a) to 3f) are performed:
3a) If a resource set is associated with only the RedCap, and the RedCap is applied to a current random access procedure, the resource set is selected to initiate random access.
3b) If a resource set is associated with only the MSG1 repetition A, and the MSG1 repetition A is applied to the current random access procedure, the resource set is selected to initiate random access.
3c) If a resource set applicable to MSG1 repetition is provided for the random access procedure, the configuration information (rach-ConfigDedated) further indicates a Msg1 repetition number, and Redcap is applicable to this random access, a resource set related to the MSG1 repetition, the Redcap, and the MSG1 repetition number is selected from the plurality of resource sets.
3d) If a contention free resource set applicable to MSG1 repetition is provided for the random access procedure, and an MSG1 repetition number is further indicated by configuration information (rach-ConfigDedated), a resource set related to only the MSG1 repetition and the MSG1 repetition number indicated by the configuration information is selected.
3e) If this random access procedure is initiated by a system information (system information, SI) request, there is a resource set related to the SI request and MSG1 repetition, and an MSG1 repetition number is provided for the random access procedure, a resource set related to only the MSG1 repetition number is selected. For example, when a random access procedure is initiated for an SI request, and a first MSG1 repetition number is provided for the random access procedure, a resource set associated with only the first MSG1 repetition number is selected.
3f) If only one resource set is associated with the RedCap and the MSG1 repetition A, and the RedCap and the MSG1 repetition A are applied to the current random access procedure, the resource set is selected to initiate random access. If a plurality of resource sets are associated with the RedCap and the MSG1 repetition A, an available resource set is selected from the plurality of resource sets according to priorities of the features to initiate the random access.

Otherwise, if a resource set is selected in none of 3a) to 3f), a resource set not associated with any feature is selected to initiate random access.

By using the procedure shown in FIG. 6, the user terminal may complete selection of a resource set.

The following describes a resource set selection method according to an embodiment of this application by using the scenario shown in FIG. 7 as an example. FIG. 7 is a schematic diagram of a resource set selection scenario according to an embodiment of this application. As shown in FIG. 7, when the user terminal selects a resource set according to random access features, there may be three cases of combinations of the random access features: Case a: RedCap; Case b: MSG1 repetition; and Case c: RedCap and MSG1 repetition. There may also be the following three cases for configuration of a resource set: Case d: The resource set is associated with RedCap and MSG1 repetition; Case e: The resource set is associated with only RedCap; and Case f: The resource set is associated with only MSG1 repetition. The MSG1 repetition may refer to an MSG1 repetition number A, where A is the repetition number. The following describes resource selection processes in the three cases:
Case 1: The resource set configured on the BWP is associated with the RedCap and the MSG1 repetition.

Scenario 1: A feature selected by the terminal is RedCap.

In scenario 1, the configured resource set is a CFRA resource, and the RedCap is applied to a current random access procedure. Because the resource set is associated with the RedCap and the MSG1 repetition number, and the resource set is not associated with only the selected feature RedCap, but also associated with the MSG1 repetition number, which does not satisfy the foregoing principle 1 stipulating that the resource set is related to only the selected feature, in this case, a resource set associated with the MSG1 repetition number is not selected as an available resource set, but a resource set not associated with any feature is selected as an available resource set to initiate random access.

Scenario 2: A feature selected by the terminal is MSG1 repetition A (or MSG1 repetition number A).

In scenario 2, the configured resource set is a CFRA resource, and the MSG1 repetition A is applied to a current random access procedure. Because the resource set is associated with the RedCap and the MSG1 repetition number, and the resource set is not associated with only the selected feature MSG1 repetition A, but also associated with the RedCap, which does not satisfy the foregoing principle 1 stipulating that the resource set is related to only the selected feature MSG1 repetition A, in this case, a resource set associated with the MSG1 repetition number is not selected as an available resource set, but a resource set not associated with any feature is selected as an available resource set to initiate random access.

Scenario 3: Features selected by the terminal are RedCap and MSG1 repetition A.

In scenario 3, the configured resource set is a CFRA resource, and the RedCap and the MSG1 repetition A are applied to a current random access procedure. Because the resource set is associated with the RedCap and the MSG1 repetition number, and is associated with only the selected features RedCap and MSG1 repetition A, and fallback of the two features from the CFRA to the CBRA may be performed, which satisfies the foregoing principle 1, in this case, the resource set configured on the BWP is selected as an available resource set.

It should be understood that, in Case 1, fallbackable features include RedCap and MSG1 repetition. When the resource set configured on the BWP is associated with the RedCap and the MSG1 repetition A, and the configured resource set is a CFRA resource, if the RedCap and the MSG1 repetition A are applied to the current random access procedure, the resource set is selected as an available resource set to initiate random access. When the RedCap and the MSG1 repetition B are applied to the current random access procedure, because the resource set is not associated with the MSG1 repetition B, the resource set cannot be selected as an available resource set to initiate random access.

If fallbackable features include RedCap and MSG1 repetition A, when the resource set configured on the BWP is associated with the RedCap and the MSG1 repetition A, and the configured resource set is a CFRA resource, if the RedCap and the MSG1 repetition A are applied to the current random access procedure, the resource set is selected as an available resource set to initiate random access. When the RedCap and the MSG1 repetition B are applied to the current random access procedure, because the MSG1 repetition B is non-fallbackable, the resource set cannot be selected as an available resource set to initiate random access.

When the configuration of the resource set is the case d in FIG. 7, that is, the resource set is associated with only the RedCap and the MSG1 repetition, and the combination of random access features is the case a, that is, the RedCap, the user terminal cannot select the resource set.

In other words, when the CFRA is configured, the RedCap is applied to the current random access procedure, and a resource set is associated with only the RedCap and the MSG1 repetition number, the resource set cannot be selected.

This is because the currently selected and fallbackable feature is only RedCap, but the resource set is further associated with MSG1 repetition, which cannot satisfy the principle 1 in the resource set selection method provided in this embodiment of this application. Therefore, the resource set cannot be selected, and a resource set not associated with any feature should be selected.

When the configuration of the resource set is the case d in FIG. 7, that is, the resource set is associated with only the RedCap and the MSG1 repetition, and the combination of random access features is the case b, that is, the MSG1 repetition, the user terminal cannot select the resource set.

In other words, when the CFRA is configured, the MSG1 repetition is applied to the current random access procedure, and a resource set is associated with only the RedCap and the MSG1 repetition number, the resource set cannot be selected.

This is because the currently selected and fallbackable feature is only MSG1 repetition, but the resource set is further associated with RedCap, which cannot satisfy the principle 1 in the resource set selection method provided in this embodiment of this application. Therefore, the resource set cannot be selected, and a resource set not associated with any feature should be selected.

When the configuration of the resource set is the case d in FIG. 7, that is, the resource set is associated with only the RedCap and the MSG1 repetition, and the combination of random access features is the case c, that is, the RedCap and the MSG1 repetition, the user terminal should select the resource set.

In other words, when the CFRA is configured, the RedCap and the MSG1 repetition are applied to the current random access procedure, and a resource set is associated with only the RedCap and the MSG1 repetition number, the user terminal should select the resource set.

This is because the currently selected and fallbackable features include the MSG1 repetition and the RedCap, and the resource set is associated with only both the RedCap and the MSG1 repetition, which can satisfy the principle 1 in the resource set selection method provided in this embodiment of this application. Therefore, the resource set should be selected.

Case 2: The resource set configured on the BWP is associated with the RedCap.

Scenario 1: A feature selected by the terminal is RedCap.

In scenario 1, the configured resource set is a CFRA resource, and the RedCap is applied to a current random access procedure. Because the resource set is associated with the RedCap and is associated with only the selected feature RedCap, which satisfies the foregoing principle 1 stipulating that the resource set is related to only the selected feature, in this case, the resource set associated with only the RedCap is selected as an available resource set to initiate random access.

Scenario 2: A feature selected by the terminal is MSG1 repetition.

In scenario 2, the configured resource set is a CFRA resource, and the MSG1 repetition is applied to a current random access procedure. Because the resource set is associated with the RedCap and is not associated with the selected feature MSG1 repetition, that is, there is no resource set associated with the feature MSG1 repetition, in this case, a resource set that is not associated with any feature is selected as an available resource set to initiate random access.

Scenario 3: Features selected by the terminal are RedCap and MSG1 repetition.

In scenario 3, the configured resource set is a CFRA resource, and the RedCap and the MSG1 repetition are applied to a current random access procedure. Because the resource set is associated with the RedCap, and the resource set is associated with only the subset RedCap of the selected features, in this case, the principle 1 is satisfied, and a resource set associated with only the RedCap is selected as an available resource set to initiate random access.

When the configuration of the resource set is the case e in FIG. 7, that is, the resource set is associated with only the RedCap, and the combination of random access features is the case a, that is, the RedCap, the user terminal should select the resource set.

In other words, when the CFRA is configured, the RedCap is applied to the current random access procedure, and a resource set is associated with only the RedCap, the resource set should be selected.

This is because the currently selected and fallbackable feature includes only the RedCap, and the resource set is associated with only the RedCap, which satisfies the principle 1 in the resource set selection method provided in this embodiment of this application. Therefore, the resource set should be selected.

When the configuration of the resource set is the case e in FIG. 7, that is, the resource set is associated with only the RedCap, and the combination of random access features is the case b, that is, the MSG1 repetition, the user terminal cannot select the resource set.

In other words, when the CFRA is configured, the MSG1 repetition is applied to the current random access procedure, and a resource set is associated with only the RedCap, the resource set cannot be selected.

This is because the currently selected and fallbackable feature is only MSG1 repetition, but the resource set is associated with only RedCap, which cannot satisfy the principle 1 in the resource set selection method provided in this embodiment of this application. Therefore, the resource set cannot be selected, and a resource set not associated with any feature should be selected.

When the configuration of the resource set is the case e in FIG. 7, that is, the resource set is associated with only the RedCap, and the combination of random access features is the case c, that is, the RedCap and the MSG1 repetition, the user terminal can select the resource set.

In other words, when the CFRA is configured, the RedCap and the MSG1 repetition are applied to the current random access procedure, and a resource set is associated with only the RedCap, the user terminal should select the resource set.

This is because the currently selected and fallbackable features include the MSG1 repetition and the RedCap, and the resource set is associated with only the RedCap, that is, the resource set is associated with only a subset of the selected and fallbackable features. Therefore, the principle 1 in the resource set selection method provided in this embodiment of this application can be satisfied, and the resource set should be selected.

When the configuration of the resource set is the case f in FIG. 7, that is, the resource set is associated with only the MSG1 repetition, and the combination of random access features is the case a, that is, the RedCap, the user terminal cannot select the resource set, and should select a resource set not associated with any feature.

In other words, when the CFRA is configured, the RedCap is applied to the current random access procedure, and a resource set is associated with only the MSG1 repetition, the resource set cannot be selected, and a resource set not associated with any feature should be selected.

This is because the currently selected and fallbackable feature is only RedCap, and the resource set is associated with only MSG1 repetition, which cannot satisfy the principle 1 in the resource set selection method provided in this embodiment of this application. Therefore, the resource set cannot be selected, and a resource set not associated with any feature should be selected.

When the configuration of the resource set is the case f in FIG. 7, that is, the resource set is associated with only the MSG1 repetition, and the combination of random access features is the case b, that is, the MSG1 repetition, the user terminal should select the resource set.

In other words, when the CFRA is configured, the MSG1 repetition is applied to the current random access procedure, and a resource set is associated with only the MSG1 repetition, the resource set should be selected.

This is because the currently selected and fallbackable feature includes only the MSG1 repetition, and the resource set is associated with only the MSG1 repetition, which satisfies the principle 1 in the resource set selection method provided in this embodiment of this application. Therefore, the resource set should be selected.

Case 3: The resource set configured on the BWP is associated with only the MSG1 repetition.

Scenario 1: A feature selected by the terminal is RedCap.

In scenario 1, the configured resource set is a CFRA resource, and the RedCap is applied to a current random access procedure. Because the resource set is associated with the MSG1 repetition and is not associated with the selected feature RedCap, which does not satisfy the foregoing principle 1 stipulating that the resource set is related to only the selected feature, in this case, a resource set not associated with any feature is selected as an available resource set to initiate random access.

Scenario 2: A feature selected by the terminal is MSG1 repetition.

In scenario 2, the configured resource set is a CFRA resource, and the MSG1 repetition is applied to a current random access procedure. Because the resource set is associated with only the MSG1 repetition and is associated with the selected feature MSG1 repetition, which satisfies the foregoing principle 1 stipulating that the resource set is related to only the selected feature, in this case, a resource set associated with only the MSG1 repetition is selected as an available resource set to initiate random access.

Scenario 3: Features selected by the terminal are RedCap and MSG1 repetition.

In scenario 3, the configured resource set is a CFRA resource, and the RedCap and the MSG1 repetition are applied to a current random access procedure. Because the resource set is associated with only the MSG1 repetition, and the resource set is associated with only the subset MSG1 repetition of the selected features, in this case, the principle 1 is satisfied, and a resource set associated with only the MSG1 repetition is selected as an available resource set to initiate random access.

It can be known from the foregoing description that in the scenario 3, when the case 2 and the case 3 coexist, that is, when a resource associated with only the MSG1 repetition and a resource associated with only the Redcap coexist, a resource set associated with only the MSG1 repetition may be selected as an available resource set to initiate random access, or a resource set associated with only the RedCap may be selected as an available resource set to initiate random access. In this case, two resource sets are available, and selection may be performed according to priorities of features. For example, if the priority of the RedCap is higher than the priority of the MSG1 repetition, a resource set associated with only the RedCap is selected as an available resource set to initiate random access. On the contrary, if the priority of the MSG1 repetition is higher than the priority of the RedCap, a resource set associated with only the MSG1 repetition is selected to initiate random access.

When the configuration of the resource set is the case f in FIG. 7, that is, the resource set is associated with only the MSG1 repetition, and the combination of random access features is the case c, that is, the RedCap and the MSG1 repetition, the user terminal should select the resource set.

In other words, when the CFRA is configured, the RedCap and the MSG1 repetition are applied to the current random access procedure, and a resource set is associated with only the MSG1 repetition, the user terminal should select the resource set.

This is because the currently selected and fallbackable features include the MSG1 repetition and the RedCap, and the resource set is associated with only the MSG1 repetition, that is, the resource set is associated with only a subset of the selected and fallbackable features. Therefore, the principle 1 in the resource set selection method provided in this embodiment of this application can be satisfied, and the resource set should be selected.

When the configuration of the resource set includes the case e and the case f in FIG. 7, that is, the configuration of the resource set includes a resource set x associated with only the MSG1 repetition, and also includes a resource set y associated with only the RedCap, the combination of the random access features is the case c, that is, the RedCap and the MSG1 repetition, the resource set x and the resource set y both satisfy the principle 1 in the resource set selection method provided in this embodiment of this application. Therefore, a resource set may be selected according to the principle 2 in this embodiment of this application, that is, according to priorities of the MSG1 repetition and the RedCap. For example, when the priority of MSG1 repetition is higher than that of RedCap, the resource set x should be selected. When the priority of the MSG1 repetition is lower than that of the RedCap, the resource set y should be selected.

In other words, when the CFRA is configured, and the RedCap and the MSG1 repetition are applied to the current random access procedure; and a resource set x is associated with only the MSG1 repetition, and a resource set y is associated with only the RedCap, the user terminal should select a resource set according to the priorities of the MSG1 repetition and the RedCap. The MSG1 repetition in FIG. 7 may be a specific repetition number, for example, MSG1 repetition A, that is, A times of MSG1 repetition.

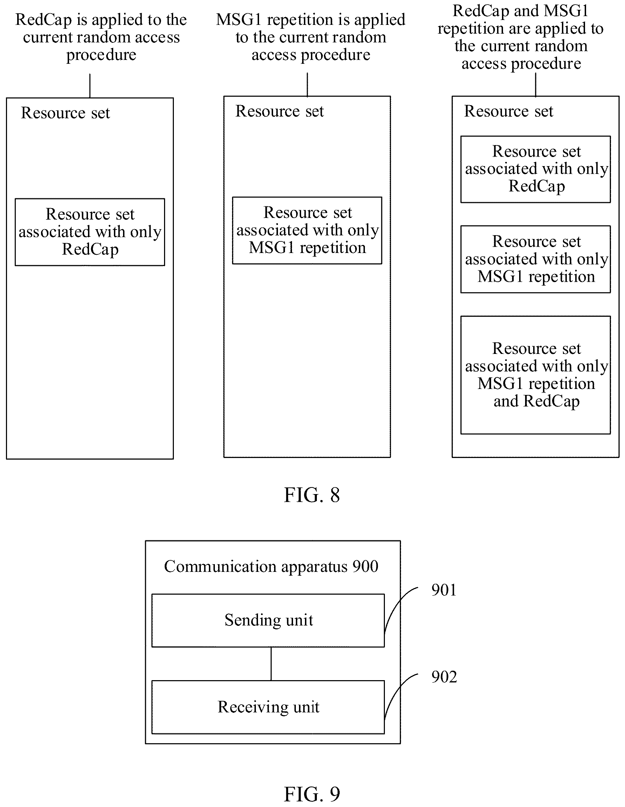

FIG. 8 is a schematic diagram of a selection result of a resource set selection method according to an embodiment of this application. As shown in FIG. 8, when CFRA is configured, and RedCap is applied to a current random access procedure, a user terminal should select a resource set associated with only the RedCap, and select, if there is no such resource set, a resource set not associated with any feature. When the CFRA is configured, and the MSG1 repetition is applied to the current random access procedure, the user terminal should select a resource set associated with only the MSG1 repetition, and select, if there is no such resource set, a resource set not associated with any feature. When the CFRA is configured, and the RedCap and the MSG1 repetition are applied to the current random access procedure, the user terminal should select a resource set associated with only the RedCap, or a resource set associated with only the MSG1 repetition, or a resource set associated with only the RedCap and the MSG1 repetition, and select, if there is none of such resource sets, a resource set not associated with any feature.

It should be additionally noted that, in some possible implementations, fallbackable features may include RedCap and MSG1 repetition. The MSG1 repetition includes all repetition numbers, that is, all the repetition numbers can fall back. Therefore, when the RedCap and the MSG1 repetition A are selected in the current random access procedure, and there is a resource set associated with only the RedCap and the MSG1 repetition A, the user terminal should select the resource set. When features RedCap and MSG1 repetition are selected in the current random access procedure, a repetition number is B, and there is a resource set associated with the RedCap and the MSG1 repetition A, because the resource set is not associated with the MSG1 repetition B, the user terminal should not select the resource set.

In some other possible implementations, fallbackable features may include RedCap and MSG1 repetition A, that is, only the MSG1 repetition A can fall back, and other MSG1 repetition numbers cannot fall back. Therefore, when the RedCap and the MSG1 repetition A are selected in the current random access procedure, and there is a resource set associated with the RedCap and the MSG1 repetition A, the user terminal should select the resource set. When RedCap and MSG1 repetition B are selected in the current random access procedure, and there is a resource set associated with the RedCap and the MSG1 repetition A, because the MSG1 repetition B is a non-fallbackable feature, the user terminal should not select the resource set.

The solutions provided in the embodiments of this application are described above mainly from a perspective of interaction between nodes. It may be understood that, methods provided in this application may also be collectively referred to as a communication method or a random access method. Specifically, according to the foregoing descriptions, the communication method may include:
obtaining random access resources, where the random access resources include random access resources for MSG1 repetition, and the MSG1 repetition includes n MSG1 repetition numbers, where n is an integer greater than or equal to 1; and
initiating a random access procedure according to the random access resources.

In a possible implementation, the obtaining random access resources includes: selecting a bandwidth part BWP, and configuring the random access resources for the MSG1 repetition on the selected BWP; and
the initiating a random access procedure according to the random access resources includes: selecting a random access resource based on thresholds corresponding to the MSG1 repetition numbers, to initiate the random access procedure.

In a possible implementation, the configuring the random access resources for the MSG1 repetition on the selected BWP includes: configuring the random access resources for the MSG1 repetition and random access resources for non-MSG1 repetition on the selected BWP; or configuring only the random access resources for the MSG1 repetition on the selected BWP.

In a possible implementation, if a threshold corresponding to an MSG1 repetition number is configured, and measured signal quality is less than the threshold corresponding to an MSG1 repetition number, the MSG1 repetition number is selected to initiate the random access procedure.

In a possible implementation, the MSG1 repetition numbers include an MSG1 repetition number 2, an MSG1 repetition number 4, and an MSG1 repetition number 8;
if a threshold corresponding to the MSG1 repetition number 8 is configured, and the measured signal quality is less than the threshold corresponding to the MSG1 repetition number 8, the MSG1 repetition number 8 is selected to initiate the random access procedure;
if a threshold corresponding to the MSG1 repetition number 4 is configured, and the measured signal quality is less than the threshold corresponding to the MSG1 repetition number 4, the MSG1 repetition number 4 is selected to initiate the random access procedure; or
if a threshold corresponding to the MSG1 repetition number 2 is configured, and the measured signal quality is less than the threshold corresponding to the MSG1 repetition number 2, the MSG1 repetition number 2 is selected to initiate the random access procedure.

In a possible implementation, when the random access resources for the MSG1 repetition and the random access resources for the non-MSG1 repetition on the selected BWP are configured, if the measured signal quality is greater than a threshold corresponding to any MSG1 repetition number, the non-MSG1 repetition is selected.

In a possible implementation, when only the random access resources for the MSG1 repetition are configured on the selected BWP, if the measured signal quality is greater than a threshold corresponding to any MSG1 repetition number, an MSG1 repetition number whose repetition number is smallest is selected.

In a possible implementation, the initiating a random access procedure according to the random access resources includes: selecting, when a contention free random access resource is configured, a random access resource according to a first fallbackable feature to initiate the random access procedure, where the first fallbackable feature includes at least one of RedCap and MSG1 repetition.

In a possible implementation, the selecting a random access resource according to a first fallbackable feature to initiate the random access procedure includes: selecting, when the first fallbackable feature is applied to the current random access procedure, a random access resource associated with only the first fallbackable feature to initiate the random access procedure.

In a possible implementation, the selecting a random access resource according to a first fallbackable feature to initiate the random access procedure includes: selecting, when the first fallbackable feature is applied to the current random access procedure and if the random access resource associated with only the first fallbackable feature does not exist in the configured random access resources, a random access resource that is not associated with any feature to initiate the random access procedure.

In a possible implementation, the selecting a random access resource according to a first fallbackable feature to initiate the random access procedure includes: selecting, when the first fallbackable feature is the RedCap and the MSG1 repetition, a random access resource associated with only the RedCap and the MSG1 repetition to initiate the random access procedure, where the random access resource is associated with a first MSG1 repetition number, and the first MSG1 repetition number is an MSG1 repetition number in the current random access procedure.

In a possible implementation, the selecting a random access resource according to a first fallbackable feature to initiate the random access procedure includes: selecting, when the first fallbackable feature is the RedCap and the MSG1 repetition and if the random access resource associated with only the RedCap and the MSG1 repetition does not exist in the configured random access resources, a random access resource that is not associated with any feature to initiate the random access procedure.

In a possible implementation, the selecting a random access resource according to a first fallbackable feature to initiate the random access procedure includes: selecting, when the first fallbackable feature is the MSG1 repetition, a random access resource associated with only the MSG1 repetition to initiate the random access procedure, where the random access resource is associated with a first MSG1 repetition number, and the first MSG1 repetition number is an MSG1 repetition number in the current random access procedure.

In a possible implementation, the selecting a random access resource according to a first fallbackable feature to initiate the random access procedure includes: selecting, when the first fallbackable feature is the MSG1 repetition and if the random access resource associated with only the MSG1 repetition does not exist in the configured random access resources, a random access resource that is not associated with any feature to initiate the random access procedure.

In a possible implementation, the initiating a random access procedure according to the random access resources includes: selecting, when a contention free random access resource is configured, a random access resource according to a subset of a first fallbackable feature to initiate the random access procedure, where the first fallbackable feature includes at least one of RedCap and MSG1 repetition.

In a possible implementation, the selecting a random access resource according to a subset of a first fallbackable feature to initiate the random access procedure includes: selecting, when the first fallbackable feature is applied to the current random access procedure, a random access resource associated with only the subset of the first fallbackable feature to initiate the random access procedure.

In a possible implementation, the initiating a random access procedure according to the random access resources includes: selecting, when at least one random access resource is available, a random access resource according to a feature priority to initiate the random access procedure.

In a possible implementation, the first fallbackable feature is RedCap and a first MSG1 repetition number, and available random access resources include at least one of the following random access resources:
a random access resource associated with only the RedCap and the first MSG1 repetition number; or
a random access resource associated with only the RedCap; or
a random access resource associated with only the first MSG1 repetition number, where the first MSG1 repetition number is an MSG1 repetition number in the current random access procedure.

In a possible implementation, the selecting a random access resource according to a feature priority to initiate the random access procedure includes: selecting, when the random access resource associated with only the RedCap and the first MSG1 repetition number is available, the random access resource associated with only the RedCap and the first MSG1 repetition number to initiate the random access procedure.

In a possible implementation, the selecting a random access resource according to a feature priority to initiate the random access procedure includes: selecting, when the random access resource associated with only the RedCap and the first MSG1 repetition number is unavailable, the random access resource associated with only the RedCap to initiate the random access procedure; or
selecting the random access resource associated with only the first MSG1 repetition number to initiate the random access procedure.

In a possible implementation, a priority of the RedCap is higher than a priority of the MSG1 repetition, and the selecting a random access resource according to a feature priority to initiate the random access procedure includes:
selecting the random access resource associated with only the RedCap according to the feature priority to initiate the random access procedure; or selecting the random access resource associated with only the first MSG1 repetition number to initiate the random access procedure, where the first MSG1 repetition number is an MSG1 repetition number in the current random access procedure.

The solutions provided in the embodiments of this application are described above mainly from a perspective of interaction between nodes. It may be understood that, to implement the foregoing functions, each node such as a terminal or a network device includes corresponding hardware structures and/or software modules for executing the functions. A person skilled in the art should be easily aware that algorithm steps in the examples described with reference to embodiments disclosed in this specification can be implemented in a form of hardware or a combination of hardware and computer software in this application. Whether a specific function is performed by hardware or hardware driven by computer software depends on a particular application and a design constraint of the technical solutions. A person skilled in the art may use different methods to implement the described functions for each particular application, but it shall not be considered that the implementation goes beyond the scope of this application.

In the embodiments of this application, the user equipment may be divided into functional modules based on the foregoing method examples. For example, each functional module may be obtained through division for a corresponding function, or two or more functions may be integrated into one processing module. The integrated module may be implemented in a form of hardware or in a form of a software functional module. It needs to be noted that, in embodiments of this application, division into the modules is an example, is merely logical function division, and may be other division during actual implementation.

FIG. 9 is a structural diagram of a communication apparatus 900. The communication apparatus 900 may be a user terminal, a chip in the user terminal, or a system-on-a-chip. The communication apparatus 900 may be configured to execute a function of the user terminal involved in the foregoing embodiments. In a possible implementation, the communication apparatus 900 shown in FIG. 9 includes: a sending unit 901 and a receiving unit 902.

The sending unit 901 is configured to initiate random access to a network side device.

The receiving unit 902 is configured to receive configuration information and the like from the network side device.

Specifically, all related content of the steps in the foregoing method embodiments may be cited to function descriptions of the corresponding functional modules. Details are not described herein again.

In another possible implementation, the communication apparatus 900 shown in FIG. 9 includes a processing module and a communication module. The processing module is configured to control and manage an action of the communication apparatus 900. For example, the processing module may support the communication apparatus 900 in executing a control function. The communication module may integrate functions of the sending unit 901 and the receiving unit 902, and may be configured to support the communication apparatus 900 in performing steps in the method embodiments and communicating with another network entity, for example, communicating with a network side device. The communication apparatus 900 may further include a storage module, configured to store program code and data of the communication apparatus 900.

The processing module may be a processor or a controller. The processing module may implement or execute various exemplary logical blocks, modules, and circuits described with reference to content disclosed in this application. The processor may alternatively be a combination that implements a computing function, such as a combination of one or more microprocessors. The communication module may be a transceiver circuit, a communication interface, or the like. The storage module may be a memory.

An embodiment of the disclosure further provides a computer-readable storage medium. All or some of the processes in the foregoing method embodiments may be implemented by a computer program instructing related hardware. The program may be stored in a computer-readable storage medium. When the program is executed, the processes in the foregoing method embodiments may be included. The computer-readable storage medium may be an internal storage unit of a terminal including, for example, a data transmit end and/or a data receive end in any one of the foregoing embodiments, for example, a hard disk or a memory of the terminal. The foregoing computer-readable storage medium may alternatively be an external storage device of the foregoing terminal, for example, a plug-in hard disk, a smart media card (smart media card, SMC), a secure digital (secure digital, SD) card, a flash card (flash card), or the like equipped on the terminal. Further, the computer-readable storage medium may further include both the internal storage unit of the terminal and the external storage device. The foregoing computer-readable storage medium is configured to store the foregoing computer program and another program and data required by the foregoing terminal. The foregoing computer-readable storage medium may be further configured to temporarily store data that has been outputted or that is to be outputted.

It needs to be noted that, in the specification, claims, and accompanying drawings of this application, the terms "first", "second", and so on are intended to distinguish between different objects but do not indicate a particular order. In addition, the terms "include", "have", and any variant thereof are intended to cover a non-exclusive inclusion. For example, processes, methods, systems, products, or devices including a series of steps or units is not limited to the listed steps or units, but instead, optionally include other steps or units not listed, or optionally include other steps or units inherent to the processes, methods, products, or devices.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate three cases: only A exists, only B exists, and both A and B exist, where A and B may be singular or plural. The character "/" generally represents an "or" relationship between the associated objects. "At least one of the following" or similar expressions refers to any combination of these items, including any combination of one item or a plurality of items. For example, at least one of a, b, or c may represent: a, b, or c, "a and b", "a and c", "b and c", or "a and b and c", where a, b, and c may be a single or plural.

It should be understood that, in embodiments of this application, "B corresponding to A" indicates that B is associated with A. For example, B may be determined based on A. It should be further understood that determining B based on A does not mean determining B only based on A, and B may also be determined based on A and/or other information. In addition, "connected" in embodiments of this application refers to various connection manners such as a direct connection or an indirect connection, to implement communication between devices. This is not limited in embodiments of this application.

Unless otherwise specified, the term "transmission" (transmit/transmission) in embodiments of this application refers to two-way transmission, including transmitting and/or receiving actions. Specifically, the "transmission" in embodiments of this application includes data transmission, data receiving, or data transmission and data receiving. Alternatively, the data transmission herein includes uplink and/or downlink data transmission. The data may include a channel and/or a signal, the uplink data transmission is uplink channel transmission and/or uplink signal transmission, and the downlink data transmission is downlink channel transmission and/or downlink signal transmission. The terms "network" and "system" in the embodiments of this application express the same concept, and a communication system is a communication network.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in another manner. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may be one or more physical units, may be located in one place, or may be distributed on different places. Some or all of the units may be selected based on actual requirements to achieve the objectives of the solutions in the embodiments.

In addition, the functional units in the embodiments of this application may be integrated into one processing unit, or each of the units may independently exist physically, or two or more units may be integrated into one unit. The integrated unit may be implemented in a form of hardware or in a form of a software functional unit.

When the integrated unit is implemented in a form of a software functional unit and sold or used as an independent product, the integrated unit may be stored in a readable storage medium. Based on such an understanding, the technical solutions of the embodiments of this application essentially, or the part contributing to the conventional technologies, or all or some of the technical solutions may be implemented in a form of a software product. The software product is stored in a storage medium and includes a plurality of instructions for instructing a device (which may be a single-chip microcomputer or a chip) or a processor (processor) to perform all or some of the steps of the methods described in the embodiments of this application. The storage medium includes various media that may store processing code, such as a USB flash drive, a removable hard disk, a ROM, a RAM, a magnetic disk, and an optical disc.

The foregoing descriptions are merely specific implementations of this application, but the protection scope of this application is not limited thereto. Any variation or replacement within the technical scope disclosed in this application shall fall within the protection scope of this application. Therefore, the protection scope of this application shall be subject to the protection scope of the claims.

## Claims

1. A communication method, wherein the method comprises:
obtaining random access resources, wherein the random access resources comprise random access resources for MSG1 repetition, and the MSG1 repetition comprises n MSG1 repetition numbers, wherein n is an integer greater than or equal to 1; and
initiating a random access procedure according to the random access resources.

2. The method according to claim 1, wherein the obtaining random access resources comprises:
selecting a bandwidth part BWP, and configuring the random access resources for the MSG1 repetition on the selected BWP; and
the initiating a random access procedure according to the random access resources comprises:
selecting a random access resource based on thresholds corresponding to the MSG1 repetition numbers, to initiate the random access procedure.

3. The method according to claim 2, wherein the configuring the random access resources for the MSG1 repetition on the selected BWP comprises:
configuring the random access resources for the MSG1 repetition and random access resources for non-MSG1 repetition on the selected BWP; or
configuring only the random access resources for the MSG1 repetition on the selected BWP.

4. The method according to any one of claims 1 to 3, wherein
if a threshold corresponding to an MSG1 repetition number is configured, and measured signal quality is less than the threshold corresponding to an MSG1 repetition number, the MSG1 repetition number is selected to initiate the random access procedure.

5. The method according to claim 4, wherein the MSG1 repetition numbers comprise an MSG1 repetition number 2, an MSG1 repetition number 4, and an MSG1 repetition number 8;
if a threshold corresponding to the MSG1 repetition number 8 is configured, and the measured signal quality is less than the threshold corresponding to the MSG1 repetition number 8, the MSG1 repetition number 8 is selected to initiate the random access procedure;
if a threshold corresponding to the MSG1 repetition number 4 is configured, and the measured signal quality is less than the threshold corresponding to the MSG1 repetition number 4, the MSG1 repetition number 4 is selected to initiate the random access procedure; or
if a threshold corresponding to the MSG1 repetition number 2 is configured, and the measured signal quality is less than the threshold corresponding to the MSG1 repetition number 2, the MSG1 repetition number 2 is selected to initiate the random access procedure.

6. The method according to claim 3, wherein
when the random access resources for the MSG1 repetition and the random access resources for the non-MSG1 repetition on the selected BWP are configured, if the measured signal quality is greater than a threshold corresponding to any MSG1 repetition number, the non-MSG1 repetition is selected.

7. The method according to claim 3, wherein
when only the random access resources for the MSG1 repetition are configured on the selected BWP, if the measured signal quality is greater than a threshold corresponding to any MSG1 repetition number, an MSG1 repetition number whose repetition number is smallest is selected.

8. The method according to claim 1, wherein the initiating a random access procedure according to the random access resources comprises:
selecting, when a contention free random access resource is configured, a random access resource according to a first fallbackable feature to initiate the random access procedure,
wherein the first fallbackable feature comprises at least one of RedCap and MSG1 repetition.

9. The method according to claim 8, wherein the selecting a random access resource according to a first fallbackable feature to initiate the random access procedure comprises:
selecting, when the first fallbackable feature is applied to the current random access procedure, a random access resource associated with only the first fallbackable feature to initiate the random access procedure.

10. The method according to claim 8 or 9, wherein the selecting a random access resource according to a first fallbackable feature to initiate the random access procedure comprises:
selecting, when the first fallbackable feature is applied to the current random access procedure and if the random access resource associated with only the first fallbackable feature does not exist in the configured random access resources, a random access resource that is not associated with any feature to initiate the random access procedure.

11. The method according to claim 8, wherein the selecting a random access resource according to a first fallbackable feature to initiate the random access procedure comprises:
selecting, when the first fallbackable feature is the RedCap and the MSG1 repetition, a random access resource associated with only the RedCap and the MSG1 repetition to initiate the random access procedure, wherein the random access resource is associated with a first MSG1 repetition number, and the first MSG1 repetition number is an MSG1 repetition number in the current random access procedure.

12. The method according to claim 11, wherein the selecting a random access resource according to a first fallbackable feature to initiate the random access procedure comprises:
selecting, when the first fallbackable feature is the RedCap and the MSG1 repetition and if the random access resource associated with only the RedCap and the MSG1 repetition does not exist in the configured random access resources, a random access resource that is not associated with any feature to initiate the random access procedure.

13. The method according to claim 8, wherein the selecting a random access resource according to a first fallbackable feature to initiate the random access procedure comprises:
selecting, when the first fallbackable feature is the MSG1 repetition, a random access resource associated with only the MSG1 repetition to initiate the random access procedure, wherein the random access resource is associated with a first MSG1 repetition number, and the first MSG1 repetition number is an MSG1 repetition number in the current random access procedure.

14. The method according to claim 13, wherein the selecting a random access resource according to a first fallbackable feature to initiate the random access procedure comprises:
selecting, when the first fallbackable feature is the MSG1 repetition and if the random access resource associated with only the MSG1 repetition does not exist in the configured random access resources, a random access resource that is not associated with any feature to initiate the random access procedure.

15. The method according to claim 1, wherein the initiating a random access procedure according to the random access resources comprises:
selecting, when a contention free random access resource is configured, a random access resource according to a subset of a first fallbackable feature to initiate the random access procedure,
wherein the first fallbackable feature comprises at least one of RedCap and MSG1 repetition.

16. The method according to claim 15, wherein the selecting a random access resource according to a subset of a first fallbackable feature to initiate the random access procedure comprises:
selecting, when the first fallbackable feature is applied to the current random access procedure, a random access resource associated with only the subset of the first fallbackable feature to initiate the random access procedure.

17. The method according to claim 1, wherein the initiating a random access procedure according to the random access resources comprises:
selecting, when at least one random access resource is available, a random access resource according to a feature priority to initiate the random access procedure.

18. The method according to claim 17, wherein
the first fallbackable feature is RedCap and a first MSG1 repetition number, and available random access resources comprise at least one of the following random access resources:
a random access resource associated with only the RedCap and the first MSG1 repetition number; or
a random access resource associated with only the RedCap; or
a random access resource associated with only the first MSG1 repetition number, wherein the first MSG1 repetition number is an MSG1 repetition number in the current random access procedure.

19. The method according to claim 18, wherein the selecting a random access resource according to a feature priority to initiate the random access procedure comprises:
selecting, when the random access resource associated with only the RedCap and the first MSG1 repetition number is available, the random access resource associated with only the RedCap and the first MSG1 repetition number to initiate the random access procedure.

20. The method according to claim 18, wherein the selecting a random access resource according to a feature priority to initiate the random access procedure comprises:
selecting, when the random access resource associated with only the RedCap and the first MSG1 repetition number is unavailable, the random access resource associated with only the RedCap to initiate the random access procedure; or
selecting the random access resource associated with only the first MSG1 repetition number to initiate the random access procedure.

21. The method according to claim 17, wherein a priority of the RedCap is higher than a priority of the MSG1 repetition, and the selecting a random access resource according to a feature priority to initiate the random access procedure comprises:
selecting the random access resource associated with only the RedCap according to the feature priority to initiate the random access procedure; or selecting the random access resource associated with only the first MSG1 repetition number to initiate the random access procedure, wherein the first MSG1 repetition number is an MSG1 repetition number in the current random access procedure.

22. A threshold configuration method, applied to a network device, wherein the method comprises:
sending a first threshold and second thresholds, wherein the first threshold is used for distinguishing whether to perform MSG1 repetition, and the second thresholds are used for distinguishing MSG1 repetition numbers; or
sending third thresholds, wherein the third thresholds are corresponding thresholds respectively configured for different MSG1 repetition numbers.

23. The method according to claim 22, wherein the first threshold and the second thresholds are configured by using a first configuration parameter, the first configuration parameter comprises the corresponding thresholds respectively configured for the different MSG1 repetition numbers, and the first threshold is a threshold corresponding to a lowest repetition number or a lowest coverage level repetition number of the different MSG1 repetition numbers; and the second thresholds are thresholds of repetition numbers other than the lowest MSG1 repetition number of the different MSG1 repetition numbers.

24. The method according to claim 22, wherein the first threshold is configured by using a second configuration parameter, and the second thresholds are configured by using a third configuration parameter.

25. The method according to any one of claims 22 to 24, wherein the first threshold is configured only when an RA resource set of non-MSG1 repetition is available.

26. The method according to any one of claims 22 to 24, wherein when n MSG1 repetition numbers are configured, a quantity of the second thresholds is n-1.

27. The method according to claim 22, wherein when n MSG1 repetition numbers are configured, a quantity of the third thresholds is n.

28. A communication apparatus, wherein the communication apparatus comprises a processor and a communication interface, and the processor and the communication interface are configured to support the communication apparatus in performing the method according to any one of claims 1 to 21; or performing the method according to any one of claims 22 to 27.

29. A computer-readable storage medium, wherein the computer-readable storage medium stores computer instructions, and when the computer instructions are run on a computer, the computer is enabled to perform the method according to any one of claims 1 to 21; or perform the method according to any one of claims 22 to 27.

30. A computer program product, wherein the computer program product comprises computer instructions, and when the computer instructions are run on a computer, the computer is enabled to perform the method according to any one of claims 1 to 21; or perform the method according to any one of claims 22 to 27.
